# EUROPÄISCHE PATENTSCHRIFT

(11) **EP 3 741 205 B1**
(45) Veröffentlichungstag und Bekanntmachung des Hinweises auf die Patenterteilung: **19.01.2022**
(21) Anmeldenummer: 20167037.9
(22) Anmeldetag: 31.03.2020
(51) Int. Cl.: A01G 23/00

(54) **MOBILE FORSTMASCHINE**
MOBILE FORESTRY MACHINE
MACHINE FORESTIÈRE MOBILE

(30) Priorität: 21.05.2019 DE 102019113522
(43) Veröffentlichungstag der Anmeldung: 25.11.2020
(73) Patentinhaber: Welschof, Bernward, 63762 Großostheim (DE)
(72) Erfinder: Welschof, Bernward, 63762 Großostheim (DE)
(74) Vertreter: Patentship Patentanwaltgesellschaft

(56) Entgegenhaltungen:
- DE-A1- 3 432 489
- DE-A1- 3 628 767
- US-B1- 8 444 361

## Beschreibung

Die Erfindung betrifft eine mobile Forstmaschine, die mit einem Fahrwerk, einer Primärenergiequelle, einer Seilwinde, einer Runge und einem verstellbaren Rampenschild versehen ist, wobei die Forstmaschine keinen Fahrerarbeitsplatz für einen Bediener aufweist.

Derartige mobile Forstmaschinen werden als Fällhilfe für Bäume und als Rückehilfe zum Vorliefern von gefällten Bäumen an einen Waldweg benutzt. Da die Forstmaschine keinen Fahrerarbeitsplatz für einen Bediener aufweist, kann eine gattungsgemäße Forstmaschine kompakt und leicht gebaut werden und ermöglicht es, in Waldgebieten eingesetzt zu werden, die für herkömmliche Großmaschinen nicht geeignet sind.

Gattungsgemäße mobile Forstmaschine weisen in der Regel als Primärenergiequelle einen Verbrennungsmotor auf. Sofern der Verbrennungsmotor als Dieselmotor oder als Benzinmotor ausgebildet ist, der mit mineralischem Kraftstoff betrieben ist und als Schmierstoff mit mineralischem Öl betrieben ist, können jedoch leicht Umweltschäden im Einsatzgebiet (Forst) auftreten, falls der Kraftstoff oder Schmierstoff beim Nachfüllen oder im Servicefall austritt.

Bei gattungsgemäßen mobilen Forstmaschinen ist bereits eine Bauweise bekannt, bei der in Fahrzeuglängsrichtung gesehen an der Fahrzeugfront und somit vor dem Antriebsmotor die Seilwinde angeordnet ist, benachbart zur Seilwinde der Antriebsmotor angeordnet ist und benachbart zum Antriebsmotor die Runge angeordnet ist. Der Antriebsmotor ist somit in Fahrzeuglängsrichtung gesehen zwischen der Seilwinde und der Runge angeordnet. Bei einer derartigen Bauweise ist nachteilig, dass das Seil der Seilwinde unterhalb des Antriebsmotors hindurchgeführt werden muss und hinter dem Antriebsmotor an einer Umlenkrolle nach oben umgelenkt werden muss, um das Seil zu einem Seilauslass an einer in Fahrzeugquerrichtung verlaufenden Trennwand führen zu können, die zwischen Antriebsmotor und Runge angeordnet ist. Dies führt zu einem ungünstigen Kraftfluss der Kräfte der Seilwinde und begrenzt die Leistung der Seilwinde.

Aus der DE 34 32 489 A1 ist ein Anhänger zum Transport von Stammholz mit einer um eine Achse kippbaren Holzauflage bekannt. Um einen Baumstamm auf die Holzauflage ziehen zu können, kann an einem den Schlepper, der den Anhänger zieht, eine Seilwinde angeordnet werden oder alternativ eine am vorderen Ende des Anhängers angebrachte elektrisch betriebene Seilwinde vorgesehen werden.

Die US 8 444 361 B1 offenbart einen Rückeanhänger mit einer Seilwinde, die von einem elektrischen Windenmotor angetrieben wird. Zur Versorgung des elektrischen Windenmotors ist der Anhänger mit einem Batteriefach und einer Batterie versehen.

Die DE 36 23 767 A1 offenbart eine ferngesteuerte mobile Forstmaschine mit einem Antriebsmotor und einem verstellbaren Schild, an dem eine Seilwinde angeordnet ist. Die Seilwinde ist von dem Antriebsmotor mittels einer Gelenkwelle oder hydrostatisch angetrieben.

Der vorliegenden Erfindung liegt die Aufgabe zugrunde, eine mobile Forstmaschine der eingangs genannten Gattung zur Verfügung zu stellen, die hinsichtlich der Umweltgefährdung verbessert ist und hinsichtlich des Kraftflusses der Kräfte der Seilwinde und der Anordnung der Komponenten der Forstmaschine verbessert ist.

Diese Aufgabe wird erfindungsgemäß dadurch gelöst, dass die mobile Forstmaschine ein elektrisches Antriebssystem aufweist, das mindestens einen elektrischen Fahrmotor aufweist und bei dem als Primärenergiequelle eine den mindestens einen elektrischen Fahrmotor mit elektrischer Energie versorgende Batterie vorgesehen ist, wobei in Fahrzeuglängsrichtung gesehen vorne die Batterie, benachbart zur Batterie die Seilwinde, benachbart zur Seilwinde die Runge und am Fahrzeugheck das verstellbare Rampenschild angeordnet sind.

Die Ausbildung der erfindungsgemäßen mobilen Forstmaschine mit einem elektrischen Antriebssystem, das mindestens einem elektrischen Fahrmotor aufweist und bei dem als Primärenergiequelle eine den mindestens einen Fahrmotor mit elektrischer Energie versorgende Batterie vorgesehen ist, führt zu dem Vorteil, dass als Primärenergiequelle auf einen Verbrennungsmotor verzichtet werden kann, so dass die Gefährdung der Umwelt im Forst durch austretenden mineralischen Kraftstoff und/oder austretendes mineralisches Öl verhindert wird.

Bei der erfindungsgemäßen Forstmaschine ist weiterhin an der Fahrzeugfront und somit vor der Seilwinde die das elektrische Antriebssystem mit elektrischer Energie versorgende Batterie angeordnet, benachbart zur Batterie die Seilwinde angeordnet und benachbart zur Seilwinde die Runge angeordnet. Bei der erfindungsgemäßen mobilen Forstmaschine ist somit die Seilwinde in Fahrzeuglängsrichtung gesehen zwischen der Batterie des elektrischen Antriebssystems und der Runge angeordnet. Eine derartige Bauweise ermöglicht es, dass das Seil der Seilwinde direkt und ohne Umlenkung an einer Umlenkrolle von der Seilwinde nach oben zu einem Seilauslass geführt werden kann, der zwischen Batterie und Runge angeordnet ist. Dies führt zu einem günstigen Kraftfluss der Kräfte der Seilwinde und ermöglicht es, die Leistung der Seilwinde zu erhöhen.

Gemäß einer Weiterbildung der Erfindung weist das elektrische Antriebssystem einen die Seilwinde antreibenden Elektromotor auf und versorgt die Batterie den die Seilwinde antreibenden Elektromotor mit elektrischer Energie.

Gemäß einer vorteilhaften Ausgestaltungsform der Erfindung ist die Batterie in einem Batterieraum, insbesondere einem geschlossenen Batterieraum, angeordnet, in dem weiterhin mindestens eine von einem Elektromotor angetriebene Hydraulikpumpe einer Hydraulikanlage der Forstmaschine angeordnet ist, wobei der die Hydraulikpumpe antreibende Elektromotor von der Batterie mit elektrischer Energie versorgt ist. Bei der erfindungsgemäßen mobilen Forstmaschine sind bevorzugt die rotativen Verbraucher, die von dem mindestens einen Fahrmotor und dem Elektromotor der Seilwinde gebildet sind, als Elektromotoren ausgebildet. Elektrische Linearantrieb sind jedoch gegenüber hydraulischen Linearantrieben teuer und weniger leistungsfähig sowie weniger robust. Mit der Anordnung mindestens einer von einem Elektromotor angetriebenen Hydraulikpumpe der Hydraulikanlage der Forstmaschine in dem Batterieraum können auf einfache Weise hydraulische Linearantriebe, beispielsweise Hydraulikzylinder, und/oder weitere hydraulische Verbraucher, beispielsweise eine Bremslüfteinrichtung und/oder hydraulische Anbaugeräte, eingesetzt und auf einfache Weise versorgt werden. Der Batterieraum kann weiterhin mit einer Dämmung versehen sein. Die Dämmung ist bevorzugt als Wärmedämmung und/oder Schalldämmung ausgebildet. Der geschlossene Batterieraum als Batterieabteil bildet somit eine kompakten Geräusch- und Wärmedämmbox, in der die Batterie mit der Hydraulikpumpe und dem die Hydraulikpumpe antreibenden Elektromotor angeordnet ist. Hierdurch ergeben sich Vorteile hinsichtlich der im Betrieb der Forstmaschine von der Hydraulikpumpe zur Umgebung abgestrahlten Geräusche und Abwärme und die Batterie kann auch bei kalten Umgebungsbedingungen auf einfache Weise auf einer günstigen Betriebstemperatur gehalten werden.

Die das elektrische Antriebssystem mit elektrischer Energie versorgende Batterie ist derart auszuführen, dass die Energieladung der Batterie für eine Tageschicht ausreicht, so dass die Batterie über die Nacht wieder aufgeladen werden kann, oder derart auszuführen, dass die Batterie mittels eines mobilen Stromerzeugers in Arbeitspausen oder vor Arbeitsbeginn aufgeladen werden kann.

Gemäß einer vorteilhaften Ausgestaltungsform der Erfindung ist die Batterie auswechselbar in dem Batterieraum angeordnet. Eine leere Batterie kann hierdurch in schneller Weise und somit bei nur kurzer Arbeitsunterbrechung gegen eine aufgeladen Batterie ausgetauscht werden.

Gemäß einer alternativen und ebenfalls vorteilhaften Ausgestaltungsform der Erfindung ist zum Laden der Batterie die Forstmaschine mit einer Stromerzeugungseinrichtung versehen, die einen von einem Verbrennungsmotor angetriebenen elektrischen Generator umfasst. Mit einer derartigen in der Forstmaschine vorhandenen Stromerzeugungseinrichtung kann auf einfache Weise die Batterie während des Betriebs der Forstmaschine bedarfsweise aufgeladen werden und auf einem gewünschten Ladezustand gehalten werden. Besondere Vorteile ergeben sich hierbei, wenn der Verbrennungsmotor der Stromerzeugungseinrichtung mit biologischem Kraftstoff, beispielsweise Bio-Diesel oder Bio-Gas oder Bio-Benzin, und Bio-Schmierstoffen betrieben ist. Ein mit biologischem Kraftstoff und biologischen Schmierstoffen betriebener Verbrennungsmotor führt bei der erfindungsgemäßen Forstmaschine zu besonderen Vorteilen, da im Einsatz in Forstgebieten mit dem Einsatz von biologischem Kraftstoff und biologischen Schmierstoffen zum Betrieb des Verbrennungsmotors mögliche Umweltschäden durch austretenden Kraftstoff und austretende Schmierstoffe vermieden werden.

Gemäß einer bevorzugten Ausgestaltungsform der Erfindung ist die Stromerzeugungseinrichtung in vertikaler Richtung oberhalb der Batterie angeordnet. Hierdurch wird eine günstige Schwerpunktlage der mobilen Forstmaschine erzielt, da die schwerere Batterie im unteren Bereich des Batterieraums angeordnet ist und die leichtere Stromerzeugungseinrichtung vertikal oberhalb der Batterie angeordnet ist. Zudem wird hierdurch eine Platzierung der Stromerzeugungseinrichtung mit einer guten Zugänglichkeit für den Service und die Wartung der Stromerzeugungseinrichtung erzielt.

Gemäß einer vorteilhaften Ausgestaltungsform der Erfindung sind die Batterie, die Seilwinde und die Runge in vertikaler Richtung oberhalb einer Bodenplatte angeordnet und ist unterhalb der Bodenplatte ein Unterboden angeordnet, wobei zwischen der Bodenplatte und dem Unterboden ein Zwischenraum ausgebildet ist. Die Bodenplatte und der Unterboden, die miteinander verbunden sind, bilden einen leichten und stabilen Fahrzeugrahmen der mobilen Forstmaschine. Die Bodenplatte trennt den Oberwagen, auf dem die Batterie, die Seilwinde und die Runge angeordnet sind, von dem Unterwagen der Forstmaschine, der mit dem Fahrwerk versehen ist. Sofern der Unterboden als durchgehendes Unterbodenblech ausgebildet ist, werden weitere Vorteile erzielt, da der Unterboden für einen durchgehenden Schutz ohne Hinterschnitte und Verhakelungsgefahr durch Bodenäste sorgt, wenn die Forstmaschine im Wald eingesetzt wird. Zudem ermöglicht es der Aufbau aus Bodenplatte und Unterboden, zwischen den beiden Ebenen, die von der Bodenplatte und dem Unterboden gebildet sind, eine Zwischenraum zu erzeugen, in dem Leitungen geschützt vor Beschädigungen und direkten Witterungseinflüssen, wie Nässe und Schnee, verlegt und eingebaut werden können.

Gemäß einer vorteilhaften Ausführungsform der Erfindung weist die Seilwinde einen in Fahrzeugquerrichtung mittig angeordneten Windenturm auf, der kraftführende Streben aufweist, die mit dem Fahrwerk verbunden sind. Der Windenturm, der in Fahrzeuglängsrichtung zwischen der Batterie und der Runge angeordnet ist und in Fahrzeugquerrichtung mittig angeordnet ist, ermöglicht es, die Kräfte aus der Seilwinde an einem zentralen Bereich der Forstmaschine aufzunehmen und auf kurzen Wegen über die kraftführende Streben in das Fahrwerk einzuleiten.

Bevorzugt sind die kraftführenden Streben als Schottwände ausgebildet, die die Bodenplatte mit dem Unterboden verbinden. Die Schottwände sind bevorzugt vertikal angeordnet und verlaufen in Fahrzeugquerrichtung.

Gemäß einer vorteilhaften Ausgestaltungsform der Erfindung weist der Windenturm an der Oberseite einen Seilauslauf für ein Seil der Seilwinde auf. Von einem derartigen Seilauslauf an der Oberseite des Windenturms kann das Seil der Seilwinde auf einfache Weise in Richtung des Fahrzeughecks und des Rampenschildes geführt werden und somit eine Seilzugführung nach hinten erzielt werden, um mit der Seilwinde Baumstämme auf die Runge ziehen zu können. Das Seil der Seilwinde ist hierbei bevorzugt ohne Umlenkrolle von der Seilwinde zu dem Seilauslauf geführt.

Gemäß einer vorteilhaften Ausgestaltungsform der Erfindung weist die Forstmaschine an der der Runge zugewandten Seite des Windenturms eine in Fahrzeugquerrichtung verlaufende vertikale Trennwand auf. Die Trennwand trennt den vorderen Bereich der Forstmaschine, in dem die Batterie mit der Hydraulikpumpe und der Windenturm mit der Seilwinde und dessen Elektromotor angeordnet sind, von dem hinteren Bereich der Forstmaschine ab, der mit der Runge und dem Rampenschild versehen ist und zur Lastaufnahme von Baumstämmen dient.

Gemäß einer vorteilhaften Weiterbildung der Erfindung ist in Fahrzeugquerrichtung an einer ersten Seite des Windenturms ein Hydraulikraum ausgebildet, in dem mindestens ein Leistungsmodul für den mindestens einen elektrischen Fahrmotor und/oder ein Leitungsmodul für den die Seilwinde antreibenden Elektromotor eingebaut sind sowie eine oder mehrere der folgenden Komponenten der Hydraulikanlage der Forstmaschine eingebaut sind:
- Öltank
- Ölfilter
- mindestens ein Hydraulikventil

In Fahrzeugquerrichtung an einer ersten Seite des Windenturms ist mit dem Hydraulikraum ein Hydraulikabteil vorgesehen, in dem die von Öltank, Ölfilter und Hydraulikventilen bestehenden Komponenten der Hydraulikanlage der Forstmaschine eingebaut werden können und in dem Anschlüsse für Hydraulikschläuche vorgesehen sind, die zu den entsprechenden hydraulischen Verbrauchern der Forstmaschine geführt sind. Zudem sind in dem Hydraulikraum mindestens ein Leistungsmodul für den mindestens einen elektrischen Fahrmotor und/oder ein Leitungsmodul für den die Seilwinde antreibenden Elektromotor. Dies ermöglicht eine einfache Montage der Forstmaschine und erleichtert den Service der Komponenten der Hydraulikanlage sowie der Leistungsmodule der elektrischen rotativen Verbraucher (Fahrmotor, elektrischer Antriebsmotor der Seilwinde) im Wartungsfall.

Gemäß einer vorteilhaften Weiterbildung der Erfindung ist in Fahrzeugquerrichtung an einer zweiten Seite des Windenturms ein Serviceraum ausgebildet, in dem eine oder mehrere der folgenden Komponenten der Forstmaschine eingebaut sind:
- ein Treibstofftank der Stromerzeugungseinrichtung
- eine Starterbatterie der Stromerzeugungseinrichtung
- ein Frischluftfilter der Stromerzeugungseinrichtung
- ein Ladegerät zum Laden der Batterie
- einen Batterietrennschalter

Sofern die mobile Forstmaschine ein rein batterie-elektrisches Antriebssystem aufweist, das nur die Batterie als Energiequelle aufweist, sind in dem Serviceraum ein Ladegerät zum Laden der Batterie und ein Batterietrennschalter angeordnet. Mit einem derartigen On-Board-Ladegerät kann die Batterie auf einfache Weise aufgeladen werden ohne ausgebaut zu werden. Der Batterietrennschalter ermöglicht die elektrische Trennung der Batterie von dem elektrischen Antriebssystem im Service-oder Wartungsfall. Sofern die mobile Arbeitsmaschine zusätzlich zur Batterie mit einer Stromerzeugungseinrichtung zum Laden der Batterie versehen ist, sind in dem Serviceraum ein Treibstofftank der Stromerzeugungseinrichtung, eine Starterbatterie der Stromerzeugungseinrichtung, ein Frischluftfilter der Stromerzeugungseinrichtung und ein Batterietrennschalter angeordnet.

In Fahrzeugquerrichtung an einer zweiten Seite des Windenturms ist mit dem Serviceraum ein Serviceabteil vorgesehen, in dem die oben genannten Komponenten angeordnet werden können. In dem Serviceraum sind hierbei diejenigen Komponenten der Forstmaschine angeordnet, die eine regelmäßige Kontrolle und Wartung benötigen, beispielsweise der Frischluftfilter und die Starterbatterie, bzw. die für den Betrieb der Forstmaschine einen einfachen und schnellen Zugriff erfordern, beispielsweise der Kraftstofftank, das Ladegerät, der Batterietrennschalter. Die Anordnung dieser Komponenten in dem Serviceraum erleichtert die Wartung und Kontrolle dieser Komponenten und ermöglicht weiterhin einen schnellen und einfachen Zugriff auf diese Komponenten.

Gemäß einer vorteilhaften Weiterbildung der Erfindung ist in Fahrzeugquerrichtung an einer Seite des Batterieraums ein Elektronikraum ausgebildet, in dem eine oder mehrere der folgenden Komponenten einer Elektrikanlage der Forstmaschine eingebaut sind:
- eine elektronische Fahrzeugsteuerung der Forstmaschine
- eine elektronische Steuerung der Stromerzeugungseinrichtung
- eine Fernsteuerung der Forstmaschine mit Ladegerät und ein Empfänger der Fernsteuerung
- mindestens eine Steckdose

In Fahrzeugquerrichtung an einer Seite des Batterieraums ist mit dem Elektronikraum ein Elektronikabteil vorgesehen, in dem die von der elektronischen Fahrzeugsteuerung der Forstmaschine, der gegebenenfalls vorhandenen elektronischen Steuerung der Stromerzeugungsvorrichtung, der Fernsteuerung der Forstmaschine mit Ladegerät und Empfänger der Fernsteuerung, und mindestens einer Steckdose bestehenden Komponenten der Elektrikanlage der Forstmaschine eingebaut werden können. Dies ermöglicht eine einfache Montage der Forstmaschine und erleichtert den Service der Komponenten der Elektrikanlage im Wartungsfall.

Bevorzugt ist gemäß einer Weiterbildung der Erfindung in vertikaler Richtung oberhalb oder unterhalb des Elektronikraums ein Stauraum ausgebildet. Seitlich neben dem Batterieraum und oberhalb oder unterhalb des Elektronikraums kann ein zusätzlicher abgeschlossener Stauraum bzw. Staufach vorgesehen werden, das gegenüber der Umgebung gut geschützt ist und die geschützte Mitführung von Utensilien ermöglicht, die für die Arbeit mit der Forstmaschine erforderlich sind, beispielsweise Mobiletelefon, Laptop, Aktenordner, Navigationsgerät.

Gemäß einer vorteilhaften Weiterbildung der Erfindung sind in vertikaler Richtung oberhalb der Batterie und der Hydraulikpumpe eine oder mehrere der folgenden Komponenten angeordnet sind:
- die Stromerzeugungseinrichtung
- eine Kühlereinrichtung der Stromerzeugungseinrichtung
- eine Auspuffanlage der Stromerzeugungseinrichtung
- eine Kühlereinrichtung der Hydraulikanlage
- mindestens ein Leistungsmodul für den mindestens einen elektrischen Fahrmotor und/oder ein Leitungsmodul für den die Seilwinde antreibenden Elektromotor

Sofern die mobile Forstmaschine ein rein batterie-elektrisches Antriebssystem aufweist, das nur die Batterie als Energiequelle aufweist, ist oberhalb der Batterie eine Kühlereinrichtung der Hydraulikanlage angeordnet. Sofern die mobile Arbeitsmaschine mit einer Stromerzeugungseinrichtung zum Laden der Batterie versehen ist, sind oberhalb der Batterie die Stromerzeugungseinrichtung, eine Kühlereinrichtung der Hydraulikanlage sowie eine Kühlereinrichtung der Stromerzeugungseinrichtung und eine Auspuffanlage der Stromerzeugungseinrichtung angeordnet. Oberhalb der Batterie kann weiterhin das mindestens eine Leistungsmodul für den mindestens einen elektrischen Fahrmotor und/oder das Leitungsmodul für den die Seilwinde antreibenden Elektromotor angeordnet sein.

Der Raum oberhalb der Batterie und der Hydraulikpumpe und somit der Raum oberhalb des Batterieraums bildet somit ein Kühler- und/oder Abgas-Abteil, in dem die Kühlereinrichtung der Hydraulikanlage und gegebenenfalls weiterhin die Stromerzeugungseinrichtung mitsamt Kühlereinrichtung sowie der Auspuffanlage der Stromerzeugungseinrichtung eingebaut werden können. Die Kühlereinrichtung der Hydraulikanlage und/oder die Stromerzeugungseinrichtung mit ihrer Kühlereinrichtung sowie Auspuffanlage sind bevorzugt an dem Windenturm befestigt. Dies ermöglicht eine einfache Montage der Forstmaschine und erleichtert den Service dieser Komponenten im Wartungsfall. Zudem kann die Abwärme und die Geräusche der Kühlereinrichtungen der Hydraulikanlage sowie der Stromerzeugungseinrichtung mit ihrer Kühlereinrichtung und Auspuffanlage in vorteilhafterweise direkt nach vertikal oben an die Umgebung abgeführt werden.

In dem Raum oberhalb des Batterieraums kann weiterhin das mindestens eine Leistungsmodul des mindestens einen elektrischen Fahrmotors und/oder das Leistungsmodul des die Seilwinde antreibenden Elektromotors eingebaut sein. Hierdurch ergeben sich Vorteile, da die Leistungsmodule für den Service- und Wartungsfall leicht zugänglich angeordnet sind.

Gemäß einer Weiterbildung der Erfindung ist ein Hitzeschutz- und Geräuschdämmkasten vorgesehen, in dem die Auspuffanlage angeordnet ist. Der Hitzeschutz- und Geräuschdämmkasten bildet somit eine Hitzeschutz- und Geräuschdämmbox um die Auspuffanlage herum und schützt die umliegenden Komponenten vor der Abwärme der Auspuffanlage der Stromerzeugungseinrichtung.

Besondere Vorteile ergeben sich, wenn die Kühlereinrichtung der Stromerzeugungseinrichtung und/oder die Kühlereinrichtung der Hydraulikanlage mit einem Luftauslass eines Kühlluftstromes nach vertikal oben angeordnet ist. Dies ermöglicht es, die Abwärme der Kühlereinrichtung der Hydraulikanlage und/oder die Abwärme der gegebenenfalls vorhandenen Kühlereinrichtung der Stromerzeugungseinrichtung über einen großen Luftauslass an der Oberseite der Forstmaschine an die Umgebung nach oben abzuführen.

Gemäß einer vorteilhaften Weiterbildung der Erfindung sind in dem Zwischenraum zwischen Bodenplatte und Unterboden elektrische Verbindungskabel verlegt, die den mindestens eine elektrischen Fahrmotor und/oder den die Seilwinde antreibenden Elektromotor mit dem entsprechenden Leistungsmodul verbinden. Hierdurch ergibt sich eine vor Beschädigungen und Umwelteinflüssen, beispielsweise Regen und Schnee, geschützte Unterflurverlegung der elektrische Verbindungskabel von den Leistungsmodulen zu den rotativen elektrischen Verbraucher der Forstmaschine, beispielsweise dem mindestens einen elektrischen Fahrmotor und dem Elektromotor der Seilwinde.

Bevorzugt sind gemäß einer vorteilhaften Ausgestaltungsform der Erfindung in der vertikalen Trennwand Ansaugöffnungen für einen zu der Kühlereinrichtung der Hydraulikanlage und/oder zu der gegebenenfalls vorhandenen Kühlereinrichtung der Stromerzeugungseinrichtung führenden Kühlluftstrom angeordnet. Die Anordnung der Ansaugöffnungen für einen zu der Kühlereinrichtung der Hydraulikanlage und der gegebenenfalls vorhandenen Kühlereinrichtung der Stromerzeugungseinrichtung führenden Kühlluftstrom in der vertikalen Trennwand zwischen Windenturm und Runge ermöglicht es, kühle Frischluft des Kühlluftstroms aus der staubfreien Zone zwischen Trennwand und Runge anzusaugen. Durch die Lage und Anordnung der Ansaugöffnungen in der vertikalen Trennwand und des Luftauslasses an der entsprechenden Kühlereinrichtung oberhalb des Batterieraums wird zudem ermöglicht, dass die kühle Zuluftströmung aus möglichst staubfreier Zone von der Runge und die warme Abluftströmung mitsamt Geräusch über die Kühlereinrichtung nach vertikal oben ohne thermischen Kurzschluss gewährleistet wird.

Besondere Vorteile ergeben sich hierbei, wenn gemäß einer vorteilhaften Weiterbildung der Erfindung in dem Kühlluftstrom stromauf der Kühlereinrichtung die Leistungsmodule angeordnet sind. Die Leistungsmodule des mindestens einen elektrischen Fahrmotors und des Elektromotors der Seilwinde, die temperaturkritische Bauteile darstellen, sind somit im Kühlluftstrom möglichst früh angeordnet und weiter stromabwärts im Kühlluftstrom die von der Kühlereinrichtung bzw. den Kühlereinrichtungen gebildeten temperaturseitig unsensibleren Bauteile angeordnet, so dass die Leistungsmodule wirkungsvoll gekühlt werden können.

Gemäß einer vorteilhaften Weiterbildung der Erfindung sind eine Seilumlenkrolle und eine Seilführung mit einer Führungsschiene für das Seil der Seilwinde vorgesehen, wobei die Führungsschiene eine Austrittsöffnung für das Seil an der Fahrzeugfront aufweist. Die Führungsschiene mit der Austrittsöffnung für das Seil an der Fahrzeugfront in Verbindung mit der Umlenkrolle ermöglicht somit auf einfache Weise eine Seilzugführung nach vorne, beispielsweise für den bergseitigen Transport von Baustämmen. Die Seilumlenkrolle ist bevorzugt im vertikal unteren Bereich der Trennwand angeordnet und die Führungsschiene erstreckt sich unter dem Windenturm und unter dem Batterieraum hindurch zur Fahrzeugfront der Forstmaschine.

Vorteilhafterweise ist die Runge um eine vertikale Achse drehbar gelagert. Die drehbare Runge kann vorteilhafterweise mittels einer Arretiervorrichtung in einer oder mehreren Stellungen arretierbar sein. Zudem ist es möglich, die Runge demontierbar auszuführen.

Gemäß einer Weiterbildung der Erfindung ist in Fahrzeuglängsrichtung zwischen der Runge und dem Rampenschild an der Bodenplatte eine Querversteifung angeordnet. Die Querversteifung ermöglicht eine verwindungssteife und stabile Ausführung der Forstmaschine am Fahrzeugheck, an dem das verstellbare Rampenschild gelagert ist und über das Baustämme mittels der Seilwinde auf die Runge gezogen werden.

Besondere Vorteil ergeben sich, wenn in Fahrzeuglängsrichtung zwischen dem Batterieraum und dem Seilauslauf an dem Windenturm eine in Fahrzeugquerrichtung verlaufende Ablagemulde ausgebildet ist, die bevorzugt nach oben offen ausgebildet ist. Die Ablagemulde kann einen U-förmigen oder V-förmigen Querschnitt haben und stellt einen nach oben offenen Behälter an der Oberseite der Forstmaschine dar. Eine derartige Ablagemulde ermöglicht es, größere Werkzeuge an der Forstmaschine mitzuführen, beispielsweise einen Fällwender, Äxte, Spalthammer, Ketten, eine Kettensäge oder einen Feuerlöscher.

Bevorzugt ist eine äußere Abdeckhaube vorgesehen, die den Batterieraum an der Fahrzeugfrontseite begrenzt und sich an den beiden Fahrzeugaußenseiten bis zur Trennwand erstreckt. Eine derartige Abdeckhaube dient zur Geräuschdämmung der vorderen Fahrzeughälfte der Forstmaschine, in der mit dem Antriebmotor, den Hydraulikpumpen und der Seilwinde die Leistungskomponenten der Forstmaschine untergebracht sind.

Vorteilhafterweise ist ein aus Rohren bestehender Schutzrahmen für die Abdeckhaube vorgesehen. Dadurch kann die Abdeckhaube auf einfache Wiese vor direkter Krafteinleitung und Beschädigungen geschützt werden.

Die erfindungsgemäße Forstmaschine weist eine Reihe von Vorteilen auf.

Die Anordnung der Seilwinde in Fahrzeuglängsrichtung zwischen der Batterie und der Runge ermöglicht einen günstigen Kraftfluss der Kräfte der Seilwinde und eine günstige Weiterleitung der Kräfte der Seilwinde über den Windenturm in das Fahrwerk. Die Forstmaschine kann daher mit einer leistungsstarken Seilwinde versehen werden.

In dem Batterieraum, dem Hydraulikraum, dem Serviceraum und dem Elektronikraum können zusammengehörige Funktionen räumlich nah in dem entsprechenden Raum angeordnet werden. Die Aufteilung der zusammengehörigen Komponenten in die entsprechenden Räume (Batterieraum, Hydraulikraum, Serviceraum, Elektronikraum) ermöglicht eine Optimierung in der Konstruktion der Forstmaschine und ermöglicht eine einfache Montage und eine einfache Wartung im Servicefall. Zudem ergeben sich Vorteile im Betrieb der Forstmaschine, da die heißen Komponenten (Leistungsmodule, Hydraulikpumpe, Kühlereinrichtung, gegebenenfalls vorhandene Stromerzeugungseinrichtung mit Kühlereinrichtung und Auspuffanlage) in den entsprechenden Räumen auf einfache Weise thermisch gedämmt werden können. Die Kühlluftführung mit Ansaugung von Frischluft an der Trennwand und Abfuhr der erwärmten Abluft an der Oberseite der Kühlereinrichtung ermöglicht eine effektive Kühlung der heißen Komponenten ohne Gefahr eines thermischen Kurzschlusses.

Die Ausführung der Forstmaschine mit einem elektrischen Antriebssystem ermöglicht es, die Umweltgefährdung auf einfache Weise zu verringern. Bei einem rein batterie-elektrischen Antriebssystem, das nur die Batterie als Energiequelle aufweist, kann auf einen Verbrennungsmotor mit dessen Kraftstoff und Schmierstoffen verzichtet werden. Bei einem elektrischen Antriebssystem mit einer Batterie und einer zusätzlichen Stromerzeugungseinrichtung kann der Verbrennungsmotor auf einfache Weise mit Bio-Kraftstoff und Bio-Schmierstoffen betrieben werden, so dass eine Gefährdung der Umwelt im Einsatz im Forst ebenfalls verhindert werden kann.

Durch die Fernbedienung ist die Forstmaschine einfach und ohne lange Einarbeitungszeit zu bedienen. Durch die Fernbedienbarkeit entsteht für den Bediener weiterhin kein Fahrerrisiko am Hang oder im Wald. Die Forstmaschine ist kompakt und leicht und als Fällhilfe für Bäume und als Rückehilfe von gefällten Bäumen zu Waldwegen einsetzbar. Ein auf der Runge abgelegter Baumstamm führt durch das auf die Forstmaschine wirkende Gewicht trotz geringem Eigengewicht der Forstmaschine zu einer hohen Traktion. Die Forstmaschine weist bevorzugt eine Breite von maximal 1,5m auf, so dass die Forstmaschine auf einem Autoanhänger zu den Einsatzorten transportiert werden kann. Die Forstmaschine ist günstig in der Anschaffung und ermöglicht eine wirtschaftliche Bewirtschaftung von kleinen Waldparzellen. Durch das Raupenfahrwerk in Verbindung mit dem geringen Eigengewicht kann eine Flächenpressung und Bodendruck im Bereich von 0,2kg/cm² erzielt werden.

Weitere Vorteile und Einzelheiten der Erfindung werden anhand der in den schematischen Figuren dargestellten Ausführungsbeispiele näher erläutert. Hierbei zeigt
- Figur 1: eine perspektivische Darstellung einer erfindungsgemäßen mobilen Forstmaschine,
- Figur 2: eine Draufsicht auf die erfindungsgemäßen Forstmaschine,
- Figur 3: eine Seitenansicht der erfindungsgemäßen Forstmaschine,
- Figur 4: eine Vorderansicht der erfindungsgemäßen Forstmaschine,
- Figur 5a: eine perspektivische Darstellung einer ersten erfindungsgemäßen mobilen Forstmaschine mit Darstellungen von Komponenten,
- Figur 5b: eine perspektivische Darstellung einer zweiten erfindungsgemäßen mobilen Forstmaschine mit Darstellungen von Komponenten,
- Figur 6: eine Darstellung gemäß der Figur 5a bzw. der Figur 5b mit der Darstellungen von weiteren Komponenten,

- Figur 7: einen Querschnitt der Forstmaschine im Bereich des Windenturms,
- Figur 8: eine Darstellung der erfindungsgemäßen Forstmaschine mit einer Verdeutlichung des Aufbaus der Seilwinde und des Windenturms,
- Figur 9a: eine perspektivische Darstellung der erfindungsgemäßen mobilen Forstmaschine der Figur 5a mit Verdeutlichung der Kühlluftströmung,
- Figur 9b: eine perspektivische Darstellung der erfindungsgemäßen mobilen Forstmaschine der Figur 5b mit Verdeutlichung der Kühlluftströmung und
- Figur 10: eine perspektivische Darstellung der erfindungsgemäßen mobilen Forstmaschine mit Verdeutlichung einer Seilführung nach vorne.

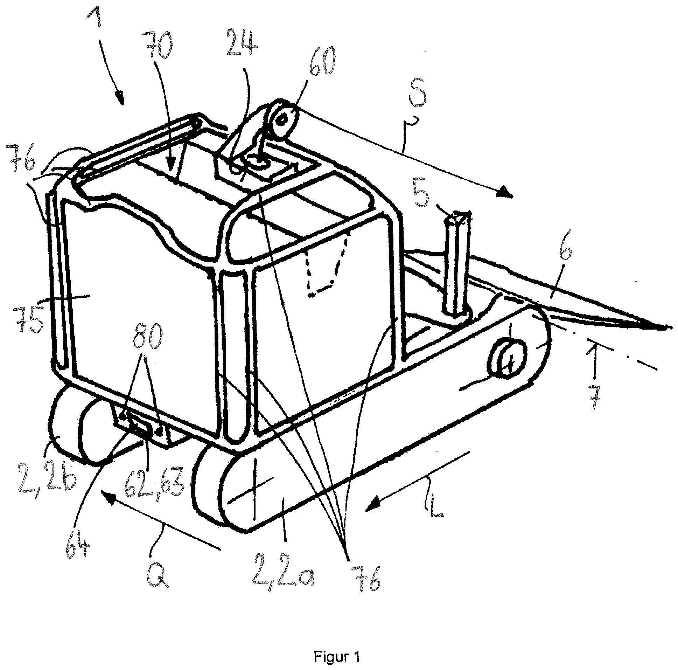

In der Figur 1 ist eine erfindungsgemäße mobile Forstmaschine 1 in einer perspektivischen Darstellung dargestellt.

Die mobile Forstmaschine 1 umfasst ein Fahrwerk 2, das von zwei Raupenfahrwerken 2a, 2b gebildet ist, die jeweils von einem nicht näher dargestellten elektrischen Fahrmotor angetrieben sind.

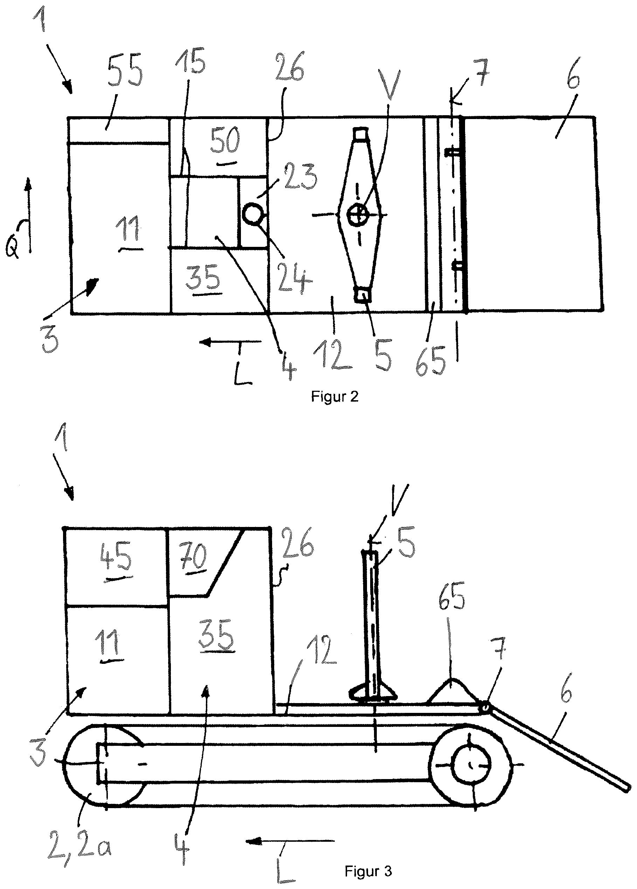

Die mobile Forstmaschine 1 weist - wie in Verbindung mit den Figuren 2 bis 9 näher ersichtlich ist - ein elektrisches Antriebssystem aufweist, das den mindestens einem elektrischen Fahrmotor und bevorzugt einen eine Seilwinde 4 antreibenden Elektromotor 21 aufweist. Als Primärenergiequelle des elektrischen Antriebssystems ist eine den mindestens einen Fahrmotor und bevorzugt den die Seilwinde 4 antreibenden Elektromotor 21 mit elektrischer Energie versorgende Batterie 3 vorgesehen ist.

Wie aus den Figuren 2 bis 9 näher ersichtlich ist, weist die mobile Forstmaschine 1 die als Primärenergiequelle des elektrischen Antriebssystems dienende Batterie 3, die Seilwinde 4, eine Runge 5 und ein verstellbares Rampenschild 6 auf, das um eine horizontale Fahrzeugquerachse 7 verstellbar ist. Die Forstmaschine 1 weist keinen Fahrerarbeitsplatz für einen Bediener aufweist und ist mittels einer nicht näher dargestellten Fernbedienung von einem Bediener bedienbar.

Bei der erfindungsgemäßen Forstmaschine 1 ist in Fahrzeuglängsrichtung L gesehen vorne die Batterie 3, benachbart zur Batterie 3 die Seilwinde 4, benachbart zur Seilwinde 4 die Runge 5 und am Fahrzeugheck das verstellbare Rampenschild 7 angeordnet sind. Die Seilwinde 4 in somit in Fahrzeuglängsrichtung gesehen zwischen der Runge 5 und der Batterie 3 angeordnet.

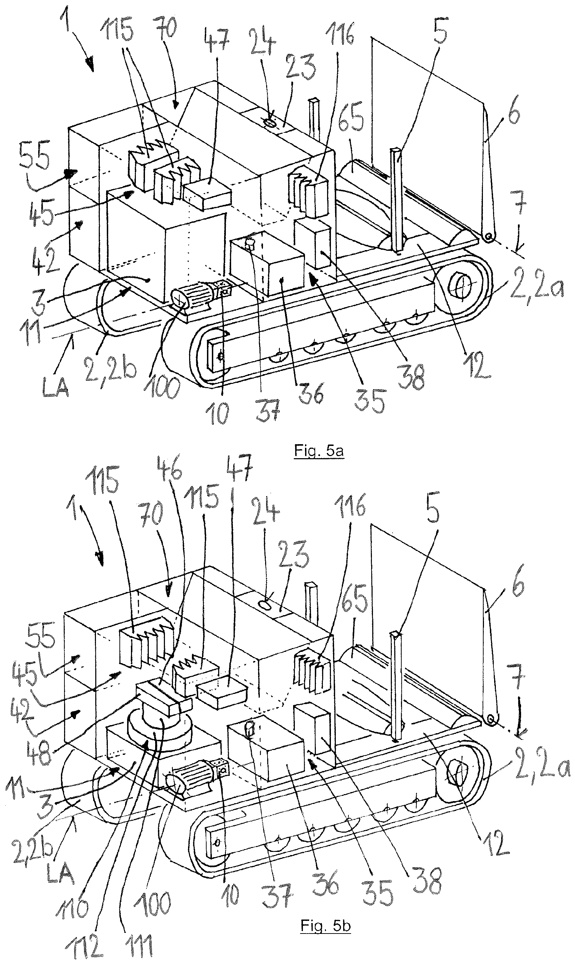

Wie aus der Figur 5a ersichtlich ist, in der ein Ausführungsbeispiel der Forstmaschine 1 mit einem rein batterie-elektrischen Antriebssystem dargestellt ist, das nur die Batterie 3 als Energiequelle umfasst, ist die Batterie 3 in einem Batterieraum 11 angeordnet, in dem weiterhin mindestens eine von einem Elektromotor 100 angetriebene Hydraulikpumpe 10 einer Hydraulikanlage der Forstmaschine 1 angeordnet ist. Der die die Hydraulikpumpe 10 antreibende Elektromotor 100 ist ebenfalls von der Batterie 3 mit elektrischer Energie versorgt.

Die Batterie 3 ist bevorzugt in Fahrzeugquerrichtung Q der Forstmaschine 1 gesehen mittig angeordnet, so dass die Batterie 3 im Wesentlichen symmetrisch zu einer Fahrzeuglängsmittelachse angeordnet ist, um eine günstigen Schwerpunktlage der Forstmaschine 1 zu erhalten. Die Hydraulikpumpe 10 mit dem Elektromotor 100 ist seitlich neben der Batterie 3 im Bereich einer Fahrzeugaußenseite angeordnet und bevorzugt mit der Langsachse LA in Fahrzeuglängsrichtung parallel zur Fahrzeuglängsmittelachse angeordnet, so dass die Hydraulikpumpe 10 mit dem Elektromotor 100 bauraumsparend neben der Batterie 3 in dem Batterieraum 11 angeordnet werden kann. Die Batterie 3 der Figur 5a ist in der Kapazität derart ausgeführt, dass die Forstmaschine 1 eine Tagesschicht betrieben werden kann. Die Batterie 3 kann in dem Batterieraum 11 leicht auswechselbar angeordnet sein, um eine entladene Batterie 3 in kurzer Zeit gegen eine aufgeladene Batterie 3 austauschen zu können.

Wie aus der Figur 5b ersichtlich ist, in der ein Ausführungsbeispiel der Forstmaschine 1 mit einem elektrischen Antriebssystem dargestellt ist, das zusätzlich zu der Batterie 3 eine Stromerzeugungseinrichtung 110 aufweist, mit der die Batterie 3 aufgeladen werden kann, ist die Batterie 3 in dem Batterieraum 11 angeordnet, in dem weiterhin mindestens eine von einem Elektromotor 100 angetriebene Hydraulikpumpe 10 einer Hydraulikanlage der Forstmaschine 1 angeordnet ist. Der die die Hydraulikpumpe 10 antreibende Elektromotor 100 ist ebenfalls von der Batterie 3 mit elektrischer Energie versorgt.

Die Batterie 3 ist bevorzugt in Fahrzeugquerrichtung der Forstmaschine gesehen mittig angeordnet, so dass die Batterie 3 im Wesentlichen symmetrisch zu einer Fahrzeuglängsmittelachse angeordnet ist, um eine günstigen Schwerpunktlage der Forstmaschine 1 zu erhalten. Die Hydraulikpumpe 10 mit dem Elektromotor 100 ist seitlich neben der Batterie 3 im Bereich einer Fahrzeugaußenseite angeordnet und bevorzugt mit der Langsachse LA in Fahrzeuglängsrichtung parallel zur Fahrzeuglängsmittelachse angeordnet, so dass die Hydraulikpumpe 10 mit dem Elektromotor 100 bauraumsparend neben der Batterie 3 in dem Batterieraum 11 angeordnet werden kann. Die Batterie 3 der Figur 5b ist in der Kapazität kleiner ausgeführt wie die Batterie 3 der Figur 5a. Die Stromerzeugungseinrichtung 110 besteht aus einem Verbrennungsmotor 111 und einem von dem Verbrennungsmotor 111 angetriebenen elektrischen Generator 112, der die Batterie 3 aufladen kann. Der Verbrennungsmotor 111 ist bevorzugt mit Bio-Kraftstoff und/oder Bio-Schmierstoffen betrieben. Die Batterie 3 weist somit die Funktion einer Pufferbatterie auf, die im Betrieb der Forstmaschine 1 von der Stromerzeugungseinrichtung 110 aufgeladen und auf einem gewünschten Ladezustand gehalten werden kann. Wie aus der Figur 5b ersichtlich ist, ist bevorzugt die Batterie 3 in dem Batterieraum 11 unten angeordnet und die Stromerzeugungseinrichtung 110 in vertikaler Richtung oberhalb der Batterie 3 angeordnet. Da die Batterie 3 schwerer als die Stromerzeugungseinrichtung 110 ist, kann dadurch eine günstige tiefe Schwerpunktlage der Forstmaschine erzielt werden.

Die Batterie 3 und die von dem Elektromotor 100 angetriebene Hydraulikpumpe 10 sind in dem bevorzugt geschlossenen Batterieraum 11 angeordnet, der mit einer Dämmung (Wärmedämmung und/oder Schalldämmung) versehen ist. Der Batterieraum 11 bildet somit ein Batterie-Pumpen-Abteil. Der im Betrieb der Forstmaschine 1 warme und laute Raum um die Batterie 3, in dem die von dem Elektromotor 100 angetriebene Hydraulikpumpe 10 angeordnet ist, wird mit dem gedämmten Batterieraum 11 zu einer kompakten Geräusch- und Wärmedämmbox.

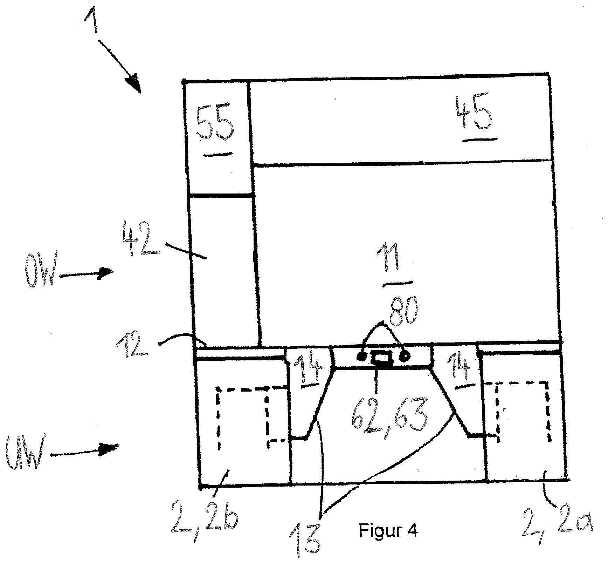

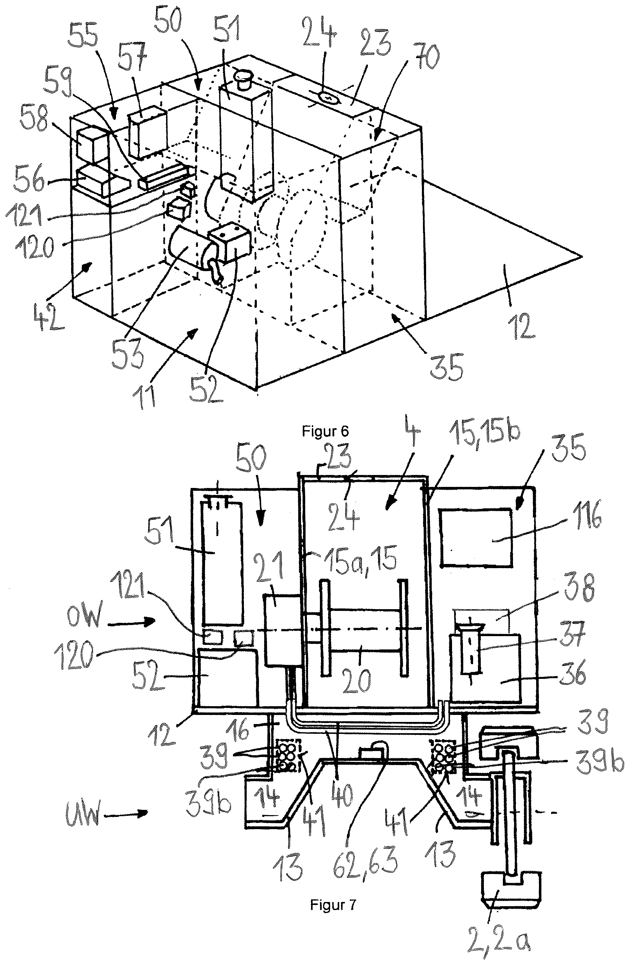

Die Batterie 3, die Seilwinde 4 und die Runge 5 sind in vertikaler Richtung oberhalb einer Bodenplatte 12 angeordnet. Unterhalb der Bodenplatte 12 ist - wie in den Figuren 4 und 7 näher dargestellt ist - ein Unterboden 13 angeordnet, wobei zwischen der Bodenplatte 12 und dem Unterboden 13 ein Zwischenraum 14 ausgebildet ist. Die Bodenplatte 12 trennt somit einen Oberwagen OW von einem Unterwagen UW der Forstmaschine 1. In dem Unterwagen UW ist das Fahrwerk 2 mit den elektrischen Fahrmotoren angeordnet.

Die Seilwinde 5 weist - wie in den Figuren 6 bis 8 näher dargestellt ist - einen in Fahrzeugquerrichtung Q mittig angeordneten Windenturm 15 auf, der kraftführende Streben 16 aufweist, die mit dem Fahrwerk 2 verbunden sind. Der Windenturm 15 besteht aus zwei senkrechten, in Fahrzeuglängsrichtung verlaufenden und voneinander in Fahrzeugquerrichtung beabstandeten Trägerplatten 15a, 15b ausgebildet, die mit dem Bodenblech 12 verbunden sind. Die Streben 16 sind als senkrecht angeordnete und in Fahrzeugquerrichtung Q verlaufende Trägerplatten, die gleichzeitig Schottwände zwischen der Bodenplatte 12 und dem Unterboden 13 bilden und die Bodenplatte 12 mit dem Unterboden 13 verbinden. An dem Windenturm 15 ist eine drehbare Seiltrommel 20 und der die Seilwinde antreibende Elektromotor 21 angeordnet.

Die beiden Trägerplatten 15a, 15b sind am oberen Ende mit einer Querstrebe 23 verbunden, in der ein Seilauslauf 24 für ein auf der Seiltrommel 20 befindliches Seil S der Seilwinde 4 angeordnet ist. Das Seil S ist von der Seiltrommel 20 ohne Umlenkrolle zu dem Seilauslauf 24 geführt.

An der der Runge 5 zugewandten Seite des Windenturms 4 ist eine in Fahrzeugquerrichtung Q verlaufende vertikale Trennwand 26 angeordnet. Die Trennwand 26 trennt eine vordere Hälfte von einer hinteren Hälfte der Forstmaschine 1 ab. Die Trennwand 26 erstreckt sich über die gesamte Fahrzeugbreite.

In Fahrzeugquerrichtung Q an einer ersten Seite des Windenturms 15 ist ein Hydraulikraum 35 ausgebildet (Figur 2), in dem - wie in der Figur 5a, 5b und der Figur 7 dargestellt ist - eine oder mehrere der folgenden Komponenten der Hydraulikanlage der Forstmaschine 1 eingebaut sind:
- Öltank 36
- Ölfilter 37
- mindestens ein Hydraulikventil 38.

In dem Hydraulikraum 35 sind weiterhin mindestens ein Leistungsmodul 115 für den mindestens einen elektrischen Fahrmotor und/oder ein Leitungsmodul 116 für den die Seilwinde 4 antreibenden Elektromotor 21 eingebaut. In den Ausführungsbeispielen der Figuren 5a, 5b und 7 ist in dem Hydraulikraum 35 ein Leitungsmodul 116 für den die Seilwinde 4 antreibenden Elektromotor 21 eingebaut.

Die Hydraulikventile 38 dienen zur Steuerung von hydraulischen Linearantrieben der Hydraulikanlage der Forstmaschine, beispielsweise Hydraulikzylindern zur Betätigung des Rampenschildes 6. Die Hydraulikanlage der Forstmaschine 1 kann weiterhin noch Nebenverbraucher, beispielsweise eine Bremslüfteinrichtung, und/oder Anbaugeräte umfassen, die mittels der Hydraulikventile 38 gesteuert sind.

Der Hydraulikraum 35 bildet somit ein Hydraulikabteil, in dem Komponenten der Hydraulikanlage der Forstmaschine 1 und die Leistungsmodule 115 und/oder 116 der elektrischen rotativen Verbraucher (Fahrmotor; Elektromotor 21 der Seiltrommel 20 ) zusammengefasst und angeordnet sind.

In Fahrzeugquerrichtung Q an einer zweiten Seite des Windenturm 15 ist ein Serviceraum 50 ausgebildet (Figur 2), in dem - wie in den Figuren 6 und 7 dargestellt ist - eine oder mehrere der folgenden Komponenten der Forstmaschine eingebaut sind:
- ein Treibstofftank 51 der Stromerzeugungseinrichtung 110,
- eine Starterbatterie 52 der Stromerzeugungseinrichtung 110
- ein Frischluftfilter 53 der Stromerzeugungseinrichtung 110
- ein Ladegerät 120 zum Laden der Batterie 3
- ein Batterietrennschalter 121.

Bei einer Ausführungsform gemäß der Figur 5a sind in dem Serviceraum 50 das Ladegerät 120 zum Laden der Batterie 3 und der Batterietrennschalter 121 angeordnet. Bei einer Ausführungsform gemäß der Figur 5b sind in dem Serviceraum 50 der Treibstofftank 51 der Stromerzeugungseinrichtung 110, die Starterbatterie 52 der Stromerzeugungseinrichtung 110, der Frischluftfilter 53 der Stromerzeugungseinrichtung 110 und der Batterietrennschalter 121 angeordnet. In dem Serviceraum 50 ist weiterhin der die Seiltrommel 20 antreibende Elektromotor 21 angeordnet.

Der Serviceraum 50 bildet somit ein Service-Abteil, in dem mit Ladegerät 120 und dem Batterietrennschalter 121 bei einem Antriebssystem gemäß der Figur 5a bzw. mit dem Treibstofftank 51, der Starterbatterie 52 und dem Frischluftfilter 53 der Stromerzeugungseinrichtung 110 und dem Batterietrennschalter 121 bei einem Antriebssystem gemäß der Figur 5b Komponenten der Forstmaschine 1 angeordnet sind, die eine zyklische Kontrolle erfordern.

In Fahrzeugquerrichtung Q an einer Seite des Batterieraums 11 ist ein Elektronikraum 55 ausgebildet ist (Figur 2), in dem - wie aus der Figur 6 dargestellt ist - eine oder mehrere der folgenden Komponenten einer Elektrikanlage der Forstmaschine eingebaut sind:
- eine elektronische Fahrzeugsteuerung 56 der Forstmaschine
- eine elektronische Steuerung 57 der Stromerzeugungseinrichtung 110
- eine Fernsteuerung der Forstmaschine mit Ladegerät und ein Empfänger 58 der Fernsteuerung
- mindestens eine Steckdose 59.

Der Elektronikraum 55 bildet somit ein Elektronik-Abteil, der besonders gegen Feuchtigkeit und Wasser geschützt ist, so dass der Elektronikraum 55 einen geschützten trockenen, moderat temperierten und schwingungsarmen Raum bildet, in dem die genannten elektrischen bzw. elektronischen Komponenten sicher eingebaut werden können.

In vertikaler Richtung oberhalb oder unterhalb des Elektronikraums 55, im dargestellten Ausführungsbeispiel unterhalb des Elektronikraums 55 ist ein Stauraum 42 ausgebildet, wie in den Figuren 4-6 dargestellt ist. Der Stauraum 42 bildet ein geschütztes Staufach und dient zur Aufbewahrung von Utensilien, die für den Betrieb der Forstmaschine 1 mitgeführt werden müssen, beispielsweise Mobiltelefon, Notebook, Aktenordner und Navigationsgerät. Im dargestellten Ausführungsbeispiel ist der Stauraum 42 in vertikaler Richtung unten angeordnet und über dem Stauraum 42 der Elektronikraum 55. Alternativ können der Stauraum 42 und der Elektronikraum 55 hinsichtlich der Anordnung vertauscht sein, so dass der Elektronikraum 55 in vertikaler Richtung unten angeordnet und über dem 42 der Elektronikraum 55 der Stauraum 42 angeordnet ist.

In vertikaler Richtung oberhalb des Batterie 3 und der von dem Elektromotor 100 angetriebenen Hydraulikpumpe 10 und somit oberhalb des Batterieraums 1 sind in einem Kühler- und/oder Abgasraum 45 (Figuren 3 und 4) eine oder mehrere der folgenden Komponenten (Figuren 5a, 5b) angeordnet:
- eine Kühlereinrichtung 47 der Hydraulikanlage
- die Stromerzeugungseinrichtung 110
- eine Kühlereinrichtung 46 der Stromerzeugungseinrichtung 110
- eine Auspuffanlage 48 der Stromerzeugungseinrichtung 110
- mindestens ein Leistungsmodul 115 für den mindestens einen elektrischen Fahrmotor und/oder ein Leitungsmodul 116 für den die Seilwinde 4 antreibenden Elektromotor 100

Bei einer Ausführungsform gemäß der Figur 5a sind in dem Raum 45 die Kühlereinrichtung 47 der Hydraulikanlage angeordnet. Bei einer Ausführungsform gemäß der Figur 5b sind in dem Raum 45 weiterhin die Stromerzeugungseinrichtung 110 und die Kühlereinrichtung 46 sowie die Auspuffanlage 48 der Stromerzeugungseinrichtung 110 angeordnet. In den Ausführungsbeispielen der Figuren 5a, 5b ist in dem Raum 45 mindestens ein Leitungsmodul 115 für den mindestens einen elektrischen Fahrmotor eingebaut. In den dargestellten Ausführungsbeispielen der Figuren 5a und 5b sind zwei Leistungsmodule 115 für zwei elektrische Fahrmotoren vorgesehen. Bei der Ausführungsform der Figur 5b sind die beiden Leistungsmodule 115 in Fahrzugquerrichtung derart voneinander beabstandet angeordnet, dass bevorzugt zwischen den beiden Leistungsmodulen 115 die Kühlereinrichtung 46 sowie die Auspuffanlage 48 der Stromerzeugungseinrichtung 110 angeordnet werden können. In den Figuren 5a und 5b ist bevorzugt die Kühlereinrichtung 47 der Hydraulikanlage seitlich neben einem der beiden Leistungsmodule 115 angeordnet.

Die Kühlereinrichtung 46 und/oder die Kühlereinrichtung 47 können mit einem angetriebenen Lüfter versehen sein, der einen Kühlluftstrom erzeugt.

Der Kühler- und/oder Abgasraum 45 bildet somit ein Kühler- und Abgas-Abteil, in dem die Leistungsmodule 115; 116, die entsprechenden Kühlereinrichtung 46, 47 und die Auspuffanlage 48 angeordnet sind. Die Leistungsmodule 115; 116, die Kühlereinrichtungen 46, 47 und die Auspuffanlage 48 sind bevorzugt an dem Windenturm 15 befestigt.

Die Kühlereinrichtung 46 und/oder die Kühlereinrichtung 47 sind bevorzugt derart angeordnet, dass diese einen Luftauslass eines Kühlluftstromes nach vertikal oben aufweisen. Der Kühler- und Abgasraum 45 ist bevorzugt an der Oberseite offen ausgeführt und weist keinen Deckel auf. Die Kühlereinrichtung 46 und/oder die Kühlereinrichtung 47 ermögliche somit eine Luft- und Wärmeabfuhr nach oben. Entsprechend ermöglicht die Auspuffanlage 48 eine Geräuschabführung der Stromerzeugungseinrichtung 110 nach oben.

Um an der Auspuffanlage 48 umliegende Komponenten vor der Abwärme der Auspuffanlage 48 zu schützen, ist bevorzugt ein Hitzeschutz- und Geräuschdämmkasten vorgesehen, in dem die Auspuffanlage 48 angeordnet ist.

An den Leistungsmodulen 115, 116 sind Anschlüsse für elektrische Verbindungsleitungen 39, 40 ausgebildet, die zu den elektrischen rotativen Verbrauchern (Fahrmotor, Elektromotor 21 der Seiltrommel 20) geführt sind. An den Hydraulikventilen 38 sind Anschlüsse für Hydraulikleitungen 39b ausgebildet, die zu den hydraulischen Verbrauchern (Hydraulikzylindern zur Betätigung des Rampenschildes 6) geführt sind.

Die elektrische Verbindungsleitungen 39, 40 und die Hydraulikleitungen 39b, die von dem Hydraulikraum 35 zu den entsprechenden Verbrauchern geführt sind, sind - wie in der Figur 7 dargestellt sind - geschützt in dem Zwischenraum 14 zwischen der Bodenplatte 12 und dem Unterboden 13 verlegt. Die als Schottwände ausgebildeten Streben 16 und weitere Schottwände 16 zwischen Bodenplatte 12 und dem Unterboden 13 können hierfür mit entsprechenden Ausnehmungen 41 versehen werden, durch die die elektrische Verbindungsleitungen 39, 40 und die Hydraulikleitungen 39b verlegt sind. In dem Zwischenraum 14 können weiterhin Hydraulikleitungen verlegt sein, die die Hydraulikpumpe 10 im Batterieraum 11 mit dem Ölbehälter 36 und den Hydraulikventilen 38 verbinden sowie elektrische Verbindungsleitungen, die die Batterie 3 mit den Leistungsmodulen 115, 116 verbindet.

Die Verlegung der elektrische Verbindungsleitungen 39, 40 und der Hydraulikleitungen 39a ist somit unterflur. Die Leitungen 39, 39a, 40 sind in dem Zwischenraum 14 zwischen Bodenplatte 12 und Unterboden 13 von dem Hydraulikraum 35 zu den entsprechenden Verbrauchern (Elektromotor 21 der Seiltrommel 20, Fahrmotor, Hydraulikzylinder des Rampenschildes 6) vor Beschädigung und direktem Wasser geschützt verlegt und durch entsprechende Ausnehmungen 41 in den Streben 16 und weiteren Schottwänden geführt.

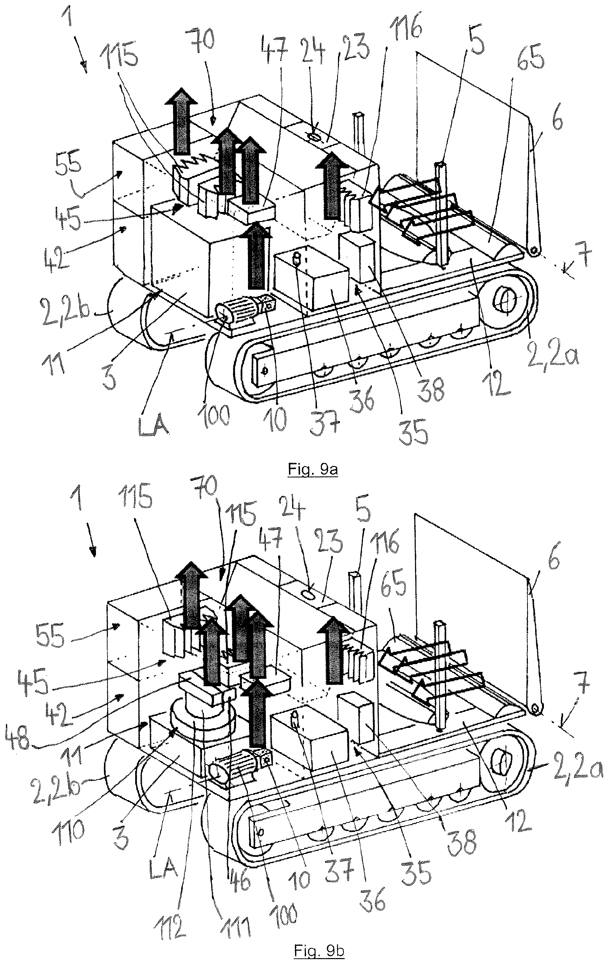

In der vertikalen Trennwand 26 sind nicht näher dargestellte Ansaugöffnungen für einen zu den Leistungsmodulen 115, 116, der Kühlereinrichtung 47 und/oder der Kühlereinrichtung 46 führenden Kühlluftstrom angeordnet, der in der Figuren 9a und 9b mit den Pfeilen dargestellt ist. Die Ansaugöffnungen sind bevorzugt in Fahrzeugquerrichtung Q im mittleren Bereich der Trennwand 26, in dem ebenfalls der Windenturm 15 angeordnet ist, oder im Bereich des Hydraulikraums 35 angeordnet. Die Frischluftzufuhr erfolgt somit durch die Trennwand 26, wobei der Kühlluftstrom von den Ansaugöffnungen in der Trennwand 5 zuerst in den Hydraulikraum 35, anschließend in den Batterieraum 11 und anschließend hoch in den Raum 45 erfolgt.

In der Figur 9a ist hierbei mit den Pfeilen der Kühlluftstrom einer Forstmaschine 1 gemäß der Figur 5a mit einem rein batterie-elektrisch betriebenen Antriebssystem dargestellt. Die Frischluftzufuhr erfolgt hierbei durch die Trennwand 26, wobei der Kühlluftstrom von den Ansaugöffnungen in der Trennwand 5 zuerst in den Hydraulikraum 35, in dem auch das Leistungsmodul 116 angeordnet ist, anschließend in den Batterieraum 11, in dem auch der Elektromotor 110 mit der Hydraulikpumpe 10 angeordnet ist, und anschließend hoch in den Raum 45 erfolgt, in dem die Leistungsmodule 115 und die mit einem Lüfter versehene Kühlereinrichtung 47 der Hydraulikanlage angeordnet sind. Der Kühlluftstrom wird somit an den drei Leistungsmodulen 115, 116, an dem Elektromotor 110 mit der Hydraulikpumpe 10 und an der Kühlereinrichtung 47 der Hydraulikanlage vorbeigeführt.

In der Figur 9b ist hierbei mit den Pfeilen der Kühlluftstrom einer Forstmaschine 1 gemäß der Figur 5b dargestellt, die ein elektrischen Antriebssystem mit einer zusätzlich zu der Batterie 3 vorgesehenen Stromerzeugungseinrichtung 110 zum Laden der Batterie 3 aufweist. Die Frischluftzufuhr erfolgt hierbei durch die Trennwand 26, wobei der Kühlluftstrom von den Ansaugöffnungen in der Trennwand 5 zuerst in den Hydraulikraum 35, in dem auch das Leistungsmodul 116 angeordnet ist, anschließend in den Batterieraum 11, in dem auch der Elektromotor 110 mit der Hydraulikpumpe 10 angeordnet ist, und anschließend hoch in den Raum 45 erfolgt, in dem die Leistungsmodule 115, die mit einem Lüfter versehene Kühlereinrichtung 47 der Hydraulikanlage und die mit einem Lüfter versehene Kühlereinrichtung 48 sowie die Auspuffanlage 48 der Stromerzeugungseinrichtung 110 angeordnet sind. Der Kühlluftstrom wird somit an den drei Leistungsmodulen 115, 116, an dem Elektromotor 110 mit der Hydraulikpumpe 10 und an den Kühlereinrichtungen 46, 47 sowie der Auspuffanlage 48 vorbeigeführt.

Diese Kühlluftströmung der Figuren 9a, 9b ermöglicht es, dass kühle Zuluft aus möglichst staubfreier Zone vor der Runge 5 angesaugt wird und die warme Abluft mitsamt Geräusch über die Kühlereinrichtungen 46 und/oder 47 nach oben abströmen kann ohne zu einem thermischen Kurzschluss zwischen kühlem Zuluftstrom und warmem Abluftstrom zu führen. Zudem wird durch einen derartigen Kühlluftstrom erzielt, dass die temperursensiblen Leistungsmodule 115, 116 der rotativen elektrischen Verbraucher zuerst von dem Kühlluftstrom gekühlt werden und der Kühlluftstrom erst weiter stromabwärts der Leistungsmodule 115, 116 zu den weniger sensiblen Komponenten und Kühlereinrichtungen 46, 47 strömt.

Über den Seilauslauf 24 kann das Seil S der Seiltrommel 20 - wie in der Figur 1 dargestellt ist - über eine Seilumlenklenkrolle 60 nach hinten zum Fahrzeugheck geführt werden, um einen oder mehrere Baumstämme über das Rampenschild 6 auf die Runge 5 zu ziehen. Die Seilumlenkrolle 60 kann als passiv umlaufende Umlenkrolle oder als aktiv angetriebene Umlenkrolle, d.h. als Auswerferrolle, ausgebildet sein. Ein auf der Runge 5 abgelegter Baumstamm führt zu einer Erhöhung der Traktion der Forstmaschine 1, so dass trotz geringem Eigengewicht der Forstmaschine 1 eine hohe Zugleistung beim Transport von Baustämmen erzielt werden.

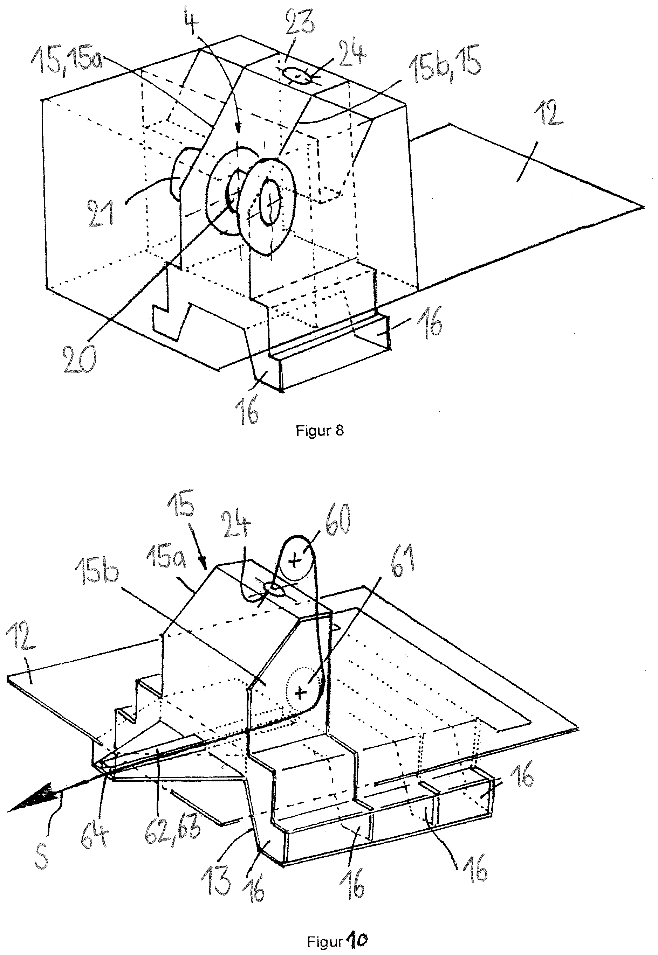

Um alternativ eine Seilzugführung des Seils S der Seiltrommel 20 nach vorne zur Fahrzeugfront zu ermöglichen, ist - wie in der Figur 10 dargestellt ist - eine weitere Seilumlenkrolle 61 vorgesehen und eine Seilführung 62 mit einer Führungsschiene 63 für das Seil S der Seilwinde 4 vorgesehen. Die Seilumlenkrolle 61 ist im unteren Bereich der Trennwand 26 angeordnet. Die Seilführung 62 mit der Führungsschiene 63 erstreckt sich von der Trennwand 26 unter dem Windenturn 16 und dem Batterieraum 11 hindurch zur vorderen Stirnseite der Forstmaschine 1, wo die Führungsschiene 63 eine Austrittsöffnung 64 für das Seil S an der Fahrzeugfront aufweist.

Die Runge 5 ist bevorzugt um eine vertikale Achse V drehbar gelagert, wie in den Figuren 2 und 3 dargestellt ist. Die drehbare Runge 5 kann vorteilhafterweise mittels einer Arretiervorrichtung in einer oder mehreren Stellungen arretierbar sein. Zudem ist es möglich, die Runge 5 demontierbar auszuführen. Die hintere Fahrzeughälfte, die sich von der Trennwand 26 zum Fahrzeugheck erstreckt, bildet bei demontierter Runge 5 einen Lastenteil, der als Aufbauraum ausgeführt ist und auf dem anstelle von Baumstämmen auch andere schwere Güter transportiert werden können, beispielsweise Zäune, Wassercontainer, Baumaterialien oder Agrargüter. In Verbindung mit der Seilzugführung nach vorne, bei der das Seil S an der Austrittsöffnung 64 an der Fahrzeugfront herausgeführt ist, kann die Forstmaschine 1 mit den auf dem Aufbauraum mitgeführten Güter mittels der Fahrmotoren einen Berg hochfahren und durch Mithilfe der Seilwinde 4 den Berg hinaufgezogen werden.

In Fahrzeuglängsrichtung L zwischen der Runge 5 und dem Rampenschild 6 ist an der Oberseite der Bodenplatte 12 weiterhin eine Querversteifung 65 angeordnet, die in den Figuren 2, 3, 5a, 5b und 9 näher dargestellt ist.

In Fahrzeuglängsrichtung L zwischen dem Batterieraum 11 bzw. dem Kühler- und/oder Abgasraum 45 und dem Seilauslauf 24 an dem Windenturm 15 ist eine in Fahrzeugquerrichtung Q verlaufende Ablagemulde 70 ausgebildet, die bevorzugt nach oben offen ausgebildet ist. Die Ablagemulde 70 weist im dargestellten Ausführungsbeispiel einen V-förmigen Querschnitt auf. Die nach oben offene Ablagemulde 70 bildet einen nach oben offenen Behälter, der es ermöglicht, größere Werkzeuge mitzunehmen, beispielsweise Fällwender, Äxte, Spalthammer, Ketten, eine Kettensäge oder einen Feuerlöscher.

Bei der erfindungsgemäßen Forstmaschine 1 bildet die vordere Fahrzeughälfte, die sich von der Fahrzeugfront bis zur Trennwand 26 erstreckt, einen Antriebsteil, in dessen vorderer Hälfte der Batterieraum 11 mit der darin angeordneten Batterie 3 und der von dem Elektromotor 100 angetriebenen Hydraulikpumpe 10 der Hydraulikanlage angeordnet ist und in dessen hinterer Hälfte die Leistungsverteilung mit der Seilwinde 4 und den Leistungsmodulen 115, 116 sowie den Hydraulikventilen 38 erfolgt. In der vorderen Hälfte des Antriebsteils ist für die in dem Batterieraum 11 angeordneten Batterie 3, Elektromotor 100 und Hydraulikpumpe 10 eine eigene Wärme- und Schalldämmung vorgesehen. Weiterhin ist für die gegebenenfalls vorhandene Auspuffanlage 48 der Stromerzeugungseinrichtung 110 eine eigene Wärmedämmung vorgesehen. In der hinteren Hälfte des Antriebsteils können weiterhin der Hydraulikraum 35 und der Serviceraum 50 gut zugänglich angeordnet werden. Bei der erfindungsgemäßen Forstmaschine 1 bildet die hintere Fahrzeughälfte, die sich von der Trennwand 26 zum Fahrzeugheck erstreckt, einen Lastenteil, der mit der Runge 5, der Querversteifung 65 und dem verstellbaren Rampenschild 6 versehen ist.

Die hintere Fahrzeughälfte bildet somit ein Rungenabteil, das aus der Trennwand 26 hinter dem Windenturm 15, dem Bodenblech 12, der Runge 5, der festen Querversteifung 65 und dem verstellbaren Rampenschild 6 besteht und dient der Lastaufnahme.

Die waagerechte Bodenplatte 12 und der Unterboden 13 sorgen mittels der Schottwände 16 für Versteifungen und für einen geschützten Zwischenraum 14 als Einbauraum für die elektrischen Verbindungsleitungen 39, 40 und die Hydraulikleitungen 39a.

Der kräfteführende Windenturm 15 mit den Streben 16 ist im Bereich der Fahrzeugmitte angeordnet, wodurch ein günstiger Kraftfluss erzielt wird. Die kräfteführenden Bauteile mit dem Windenturm 15 und den Streben 16 konzentrieren sich somit in Fahrzeuglängsrichtung in der Fahrzeugmitte.

Bei der erfindungsgemäßen Forstmaschine 1 ist eine äußere Abdeckhaube 75 vorgesehen (Figur 1), die als Gesamtabdeckung und Geräuschdämmung der vorderen Fahrzeughälfte dient. Die Abdeckhaube 75 begrenzt die Fahrzeugfrontseite und erstreckt sich an den beiden Fahrzeugaußenseiten bis zur Trennwand 26. Um die Abdeckhaube 75 vor direkter Krafteinleitung und mechanischen Beschädigungen zu schützen ist aus Rohren bestehender Schutzrahmen 76 für die Abdeckhaube 75 vorgesehen.

An der Fahrzeugfront und dem Fahrzeugheck kann weiterhin eine Befestigungsschnittstelle für eine Anhängekupplung angebracht sein. In der Figur 1 ist eine derartige Befestigungsschnittstelle 80 an der Fahrzeugfront dargestellt.

Der Batterieraum 11, der Hydraulikraum 35, der Serviceraum 50, der Elektronikraum 55 und der Stauraum 42 sind bevorzugt als abgeschlossenen Räume ausgebildet, die jeweils an allen sechs Seiten von entsprechenden Wänden begrenzt sind und somit von benachbarten Räumen durch entsprechende Wände abgetrennt sind.

Die Hydraulikanlage der erfindungsgemäßen Forstmaschine 1 ist bevorzugt mit Bio-Hydrauliköl betrieben, beispielsweise einem Bio-Hydrauliköl auf Esterbasis. Eine mit biologischem Hydrauliköl betriebene Hydraulikanlage führt bei der erfindungsgemäßen Forstmaschine 1 zu besonderen Vorteilen, da im Einsatz in Forstgebieten mit dem Einsatz von biologischem Hydrauliköl mögliche Umweltschäden durch austretendes Hydrauliköl vermieden werden können.

## Patentansprüche

1. Mobile Forstmaschine (1), die mit einem Fahrwerk (2), einer Primärenergiequelle, einer Seilwinde (4), einer Runge (5) und einem verstellbaren Rampenschild (6) versehen ist, wobei die Forstmaschine (1) keinen Fahrerarbeitsplatz für einen Bediener aufweist, **dadurch gekennzeichnet, dass** die mobile Forstmaschine ein elektrisches Antriebssystem aufweist, das mindestens einen elektrischen Fahrmotor aufweist und bei dem als Primärenergiequelle eine den mindestens einen elektrischen Fahrmotor mit elektrischer Energie versorgende Batterie (3) vorgesehen ist, wobei in Fahrzeuglängsrichtung (L) gesehen vorne die Batterie (3), benachbart zur Batterie (3) die Seilwinde (4), benachbart zur Seilwinde (4) die Runge (5) und am Fahrzeugheck das verstellbare Rampenschild (6) angeordnet sind.

2. Mobile Forstmaschine nach Anspruch 1, **dadurch gekennzeichnet, dass** das elektrische Antriebssystem einen die Seilwinde (4) antreibenden Elektromotor (21) aufweist und die Batterie (3) den die Seilwinde (4) antreibenden Elektromotor (21) mit elektrischer Energie versorgt.

3. Mobile Forstmaschine nach Anspruch 1 oder 2, **dadurch gekennzeichnet, dass** die Batterie (3) in einem Batterieraum (11), insbesondere einem geschlossenen Batterieraum, angeordnet ist, in dem weiterhin mindestens eine von einem Elektromotor (100) angetriebene Hydraulikpumpe (10) einer Hydraulikanlage der Forstmaschine (1) angeordnet ist, wobei der die Hydraulikpumpe (10) antreibende Elektromotor (100) von der Batterie (3) mit elektrischer Energie versorgt ist.

4. Mobile Forstmaschine nach Anspruch 3, **dadurch gekennzeichnet, dass** die Batterie (3) auswechselbar in dem Batterieraum (11) angeordnet ist.

5. Mobile Forstmaschine nach einem der Ansprüche 1 bis 4, **dadurch gekennzeichnet, dass** zum Laden der Batterie (3) eine Stromerzeugungseinrichtung (110) vorgesehen ist, die einen von einem Verbrennungsmotor (111) angetriebenen elektrischen Generator (112) umfasst.

6. Mobile Forstmaschine nach Anspruch 5, **dadurch gekennzeichnet, dass** die Stromerzeugungseinrichtung (110) in vertikaler Richtung oberhalb der Batterie (3) angeordnet ist.

7. Mobile Forstmaschine nach einem der Ansprüche 1 bis 6, **dadurch gekennzeichnet, dass** die Batterie (3), die Seilwinde (4) und die Runge (5) in vertikaler Richtung oberhalb einer Bodenplatte (12) angeordnet sind und unterhalb der Bodenplatte (12) ein Unterboden (13) angeordnet ist, wobei zwischen der Bodenplatte (12) und dem Unterboden (13) ein Zwischenraum (14) ausgebildet ist.

8. Mobile Forstmaschine nach einem der Ansprüche 1 bis 7, **dadurch gekennzeichnet, dass** die Seilwinde (4) einen in Fahrzeugquerrichtung (Q) mittig angeordneten Windenturm (15) aufweist, der kraftführende Streben (16) aufweist, die mit dem Fahrwerk (2) verbunden sind.

9. Mobile Forstmaschine nach Anspruch 8, **dadurch gekennzeichnet, dass** die Streben (16) als Schottwände ausgebildet sind, die die Bodenplatte (12) mit dem Unterboden (13) verbinden.

10. Mobile Forstmaschine nach Anspruch 8 oder 9, **dadurch gekennzeichnet, dass** der Windenturm (15) an der Oberseite einen Seilauslauf (24) für ein Seil (S) der Seilwinde (4) aufweist.

11. Mobile Forstmaschine nach einem der Ansprüche 8 bis 10, **dadurch gekennzeichnet, dass** die Forstmaschine (1) an der der Runge (5) zugewandten Seite des Windenturms (15) eine in Fahrzeugquerrichtung (Q) verlaufende vertikale Trennwand (26) aufweist.

12. Mobile Forstmaschine nach einem der Ansprüche 8 bis 11, **dadurch gekennzeichnet, dass** in Fahrzeugquerrichtung (Q) an einer ersten Seite des Windenturms (15) ein Hydraulikraum (35) ausgebildet ist, in dem mindestens ein Leistungsmodul (115) für den mindestens einen elektrischen Fahrmotor und/oder ein Leitungsmodul (116) für den die Seilwinde (4) antreibenden Elektromotor (21) eingebaut sind sowie eine oder mehrere der folgenden Komponenten der Hydraulikanlage der Forstmaschine (1) eingebaut sind:
• Öltank (36)
• Ölfilter (37)
• mindestens ein Hydraulikventil (38)

13. Mobile Forstmaschine nach einem der Ansprüche 8 bis 12, **dadurch gekennzeichnet, dass** in Fahrzeugquerrichtung (Q) an einer zweiten Seite des Windenturms (15) ein Serviceraum (50) ausgebildet ist, in dem eine oder mehrere der folgenden Komponenten der Forstmaschine eingebaut sind:
• ein Treibstofftank (51) der Stromerzeugungseinrichtung (110)
• eine Starterbatterie (52) der Stromerzeugungseinrichtung (110)
• ein Frischluftfilter (53) der Stromerzeugungseinrichtung (110)
• ein Ladegerät (120) zum Laden der Batterie (3)
• einen Batterietrennschalter (121)

14. Mobile Forstmaschine nach einem der Ansprüche 3 bis 13, **dadurch gekennzeichnet, dass** in Fahrzeugquerrichtung (Q) an einer Seite des Batterieraums (11) ein Elektronikraum (55) ausgebildet ist, in dem eine oder mehrere der folgenden Komponenten einer Elektrikanlage der Forstmaschine (1) eingebaut sind:
• eine elektronische Fahrzeugsteuerung (56) der Forstmaschine (1)
• eine elektronische Steuerung (57) der Stromerzeugungseinrichtung (110)
• eine Fernsteuerung der Forstmaschine mit Ladegerät und ein Empfänger (58) der Fernsteuerung
• mindestens eine Steckdose (59)

15. Mobile Forstmaschine nach Anspruch 14, **dadurch gekennzeichnet, dass** in vertikaler Richtung oberhalb oder unterhalb des Elektronikraums (55) ein Stauraum (42) ausgebildet ist.

16. Mobile Forstmaschine nach einem der Ansprüche 1 bis 15, **dadurch gekennzeichnet, dass** in vertikaler Richtung oberhalb der Batterie (3) eine oder mehrere der folgenden Komponenten angeordnet sind:
• die Stromerzeugungseinrichtung (110)
• eine Kühlereinrichtung (46) der Stromerzeugungseinrichtung (110)
• eine Auspuffanlage (48) der Stromerzeugungseinrichtung (110)
• eine Kühlereinrichtung (47) der Hydraulikanlage
• mindestens ein Leistungsmodul (115) für den mindestens einen elektrischen Fahrmotor und/oder ein Leitungsmodul (116) für den die Seilwinde (4) antreibenden Elektromotor (100)

17. Mobile Forstmaschine nach Anspruch 16, **dadurch gekennzeichnet, dass** ein Hitzeschutz- und Geräuschdämmkasten vorgesehen ist, in dem die Auspuffanlage (48) angeordnet ist.

18. Mobile Forstmaschine nach Anspruch 16 oder 17, **dadurch gekennzeichnet, dass** die Kühlereinrichtung (46) der Stromerzeugungseinrichtung (110) und/oder die Kühlereinrichtung (47) der Hydraulikanlage mit einem Luftauslass eines Kühlluftstromes nach vertikal oben angeordnet ist.

19. Mobile Forstmaschine nach einem der Ansprüche 7 bis 18, **dadurch gekennzeichnet, dass** in dem Zwischenraum (14) zwischen Bodenplatte (12) und Unterboden (13) elektrische Verbindungskabel (39, 40) verlegt sind, die den mindestens eine elektrischen Fahrmotor und/oder den die Seilwinde (4) antreibenden elektrischen Antriebsmotor (21) mit dem Leistungsmodul (115; 116) verbinden.

20. Mobile Forstmaschine nach einem der Ansprüche 11 bis 19, **dadurch gekennzeichnet, dass** in der vertikalen Trennwand (26) Ansaugöffnungen für einen zu der Kühlereinrichtung (46) der Stromerzeugungseinrichtung (110) und/oder der Kühlereinrichtung (47) der Hydraulikanlage führenden Kühlluftstrom angeordnet sind.

21. Mobile Forstmaschine nach Anspruch 20, **dadurch gekennzeichnet, dass** in dem Kühlluftstrom stromauf der Kühlereinrichtung (46; 47) die Leistungsmodule (115; 116) angeordnet sind.

22. Mobile Forstmaschine nach einem der Ansprüche 1 bis 21, **dadurch gekennzeichnet, dass** eine Seilumlenkrolle (61) und eine Seilführung (62) mit einer Führungsschiene (63) für das Seil (S) der Seilwinde (4) vorgesehen sind, wobei die Führungsschiene (63) eine Austrittsöffnung (64) für das Seil (S) an der Fahrzeugfront aufweist.

23. Mobile Forstmaschine nach einem der Ansprüche 1 bis 22, **dadurch gekennzeichnet, dass** die Runge (5) um eine vertikale Achse (V) drehbar gelagert ist.

24. Mobile Forstmaschine nach einem der Ansprüche 7 bis 23, **dadurch gekennzeichnet, dass** in Fahrzeuglängsrichtung (L) zwischen der Runge (5) und dem Rampenschild (6) an der Bodenplatte (12) eine Querversteifung (65) angeordnet ist.

25. Mobile Forstmaschine nach einem der Ansprüche 3 bis 24, **dadurch gekennzeichnet, dass** in Fahrzeuglängsrichtung (L) zwischen dem Batterieraum (11) und dem Seilauslauf (24) an dem Windenturm (15) eine in Fahrzeugquerrichtung (Q) verlaufende Ablagemulde (70) ausgebildet ist, die bevorzugt nach oben offen ausgebildet ist.

26. Mobile Forstmaschine nach einem der Ansprüche 3 bis 25, **dadurch gekennzeichnet, dass** eine äußere Abdeckhaube (75) vorgesehen ist, die den Batterieraum (11) an der Fahrzeugfrontseite begrenzt und sich an den beiden Fahrzeugaußenseiten bis zur Trennwand (26) erstreckt.

27. Mobile Forstmaschine nach Anspruch 26, **dadurch gekennzeichnet, dass** ein aus Rohren bestehender Schutzrahmen (76) für die Abdeckhaube (70) vorgesehen ist.

## Claims

1. Forestry machine (1) which is provided with a running gear arrangement (2), a primary energy source, a cable winch (4), a stanchion (5) and an adjustable ramp plate (6), wherein the forestry machine (1) does not have a driver station for an operator, **characterized in that** the mobile forestry machine has an electric drive system which has at least one electric traction motor and in which a battery (3) that supplies electrical energy to the at least one electric traction motor is provided as the primary energy source, wherein, as seen in the vehicle longitudinal direction (L), the battery (3) is arranged at the front, the cable winch (4) is arranged adjacent to the battery (3), the stanchion (5) is arranged adjacent to the cable winch (4) and the adjustable ramp plate (6) is arranged at the rear of the vehicle.

2. Mobile forestry machine according to Claim 1, **characterized in that** the electric drive system has an electric motor (21) that drives the cable winch (4), and the battery (3) supplies electrical energy to the electric motor (21) that drives the cable winch (4).

3. Mobile forestry machine according to Claim 1 or 2, **characterized in that** the battery (3) is arranged in a battery compartment (11), in particular a closed battery compartment, in which at least one hydraulic pump (10), that is driven by an electric motor (100), of a hydraulic system of the forestry machine (1) is furthermore arranged, wherein the electric motor (100) that drives the hydraulic pump (10) is supplied with electrical energy by the battery (3).

4. Mobile forestry machine according to Claim 3, **characterized in that** the battery (3) is arranged replaceably in the battery compartment (11).

5. Mobile forestry machine according to one of Claims 1 to 4, **characterized in that** a power-generating device (110) is provided for charging the battery (3), which power-generating device comprises an electrical generator (112) that is driven by an internal combustion engine (111).

6. Mobile forestry machine according to Claim 5, **characterized in that** the power-generating device (110) is arranged above the battery (3) in the vertical direction.

7. Mobile forestry machine according to one of Claims 1 to 6, **characterized in that** the battery (3), the cable winch (4) and the stanchion (5) are arranged above a base plate (12) in the vertical direction and an underbody (13) is arranged below the base plate (12), wherein an intermediate space (14) is formed between the base plate (12) and the underbody (13).

8. Mobile forestry machine according to one of Claims 1 to 7, **characterized in that** the cable winch (4) has a winch tower (15) that is arranged centrally in the vehicle transverse direction (Q) and has force-guiding struts (16) which are connected to the running gear arrangement (2).

9. Mobile forestry machine according to Claim 8, **characterized in that** the struts (16) are in the form of partition walls which connect the base plate (12) to the underbody (13).

10. Mobile forestry machine according to Claim 8 or 9, **characterized in that** the winch tower (15) has, on the top side, a cable outlet (24) for a cable (S) of the cable winch (4).

11. Mobile forestry machine according to one of Claims 8 to 10, **characterized in that** the forestry machine (1) has, on that side of the winch tower (15) which faces the stanchion (5), a vertical separating wall (26) that runs in the vehicle transverse direction (Q).

12. Mobile forestry machine according to one of Claims 8 to 11, **characterized in that** a hydraulic space (35) is formed on a first side of the winch tower (15) in the vehicle transverse direction (Q), at least one power module (115) for the at least one electric traction motor and/or one power module (116) for the electric motor (21) that drives the cable winch (4) being installed in said hydraulic space and one or more of the following components of the hydraulic system of the forestry machine (1) being installed in said hydraulic space:
• oil tank (36),
• oil filter (37)
• at least one hydraulic valve (38).

13. Mobile forestry machine according to one of Claims 8 to 12, **characterized in that** a service compartment (50) is formed on a second side of the winch tower (15) in the vehicle transverse direction (Q), one or more of the following components of the forestry machine being installed in said service compartment:
• a fuel tank (51) of the power-generating device (110)
• a starter battery (52) of the power-generating device (110)
• a fresh-air filter (53) of the power-generating device (110)
• a charger (120) for charging the battery (3)
• a battery disconnection switch (121).

14. Mobile forestry machine according to one of Claims 3 to 13, **characterized in that** an electronics compartment (55) is formed on one side of the battery compartment (11) in the vehicle transverse direction (Q), one or more of the following components of an electrical system of the forestry machine (1) being installed in said electronics compartment:
• an electronic vehicle controller (56) of the forestry machine (1)
• an electronic controller (57) of the power-generating device (110)
• a remote controller of the forestry machine with a charger, and a receiver (58) of the remote controller
• at least one plug socket (59).

15. Mobile forestry machine according to Claim 14, **characterized in that** a storage compartment (42) is formed above or below the electronics compartment (55) in the vertical direction.

16. Mobile forestry machine according to one of Claims 1 to 15, **characterized in that** one or more of the following components are arranged above the battery (3) in the vertical direction:
• the power-generating device (110),
• a radiator device (46) of the power-generating device (110)
• an exhaust system (48) of the power-generating device (110)
• a radiator device (47) of the hydraulic system
• at least one power module (115) for the at least one electric traction motor and/or one power module (116) for the electric motor (100) that drives the cable winch (4).

17. Mobile forestry machine according to Claim 16, **characterized in that** a heat-protection and noise-damping box is provided, the exhaust system (48) being arranged in said box.

18. Mobile forestry machine according to Claim 16 or 17, **characterized in that** the radiator device (46) of the power-generating device (110) and/or the radiator device (47) of the hydraulic system are/is arranged with an air outlet of a cooling-air flow vertically at the top.

19. Mobile forestry machine according to one of Claims 7 to 18, **characterized in that** electric connecting cables (39, 40) are laid in the intermediate space (14) between the base plate (12) and the underbody (13), said cables connecting the at least one electric traction motor and/or the electric drive motor (21) that drives the cable winch (4) to the power module (115; 116).

20. Mobile forestry machine according to one of Claims 11 to 19, **characterized in that** intake openings for a cooling-air flow that leads to the radiator device (46) of the power-generating device (110) and/or the radiator device (47) of the hydraulic system are arranged in the vertical separating wall (26).

21. Mobile forestry machine according to Claim 20, **characterized in that** the power modules (115; 116) are arranged upstream of the radiator device (46; 47) in the cooling-air flow.

22. Mobile forestry machine according to one of Claims 1 to 21, **characterized in that** a cable deflection roller (61) and a cable guide (62) are provided with a guide rail (63) for the cable (S) of the cable winch (4), wherein the guide rail (63) has an outlet opening (64) for the cable (S) on the vehicle front.

23. Mobile forestry machine according to one of Claims 1 to 22, **characterized in that** the stanchion (5) is mounted rotatably about a vertical axis (V).

24. Mobile forestry machine according to one of Claims 7 to 23, **characterized in that** a transverse reinforcement (65) is arranged on the base plate (12) between the stanchion (5) and the ramp plate (6) in the vehicle longitudinal direction (L).

25. Mobile forestry machine according to one of Claims 3 to 24, **characterized in that** a storage recess (70) that runs in the vehicle transverse direction (Q) and is preferably open at the top is formed on the winch tower (15) between the battery compartment (11) and the cable outlet (24) in the vehicle longitudinal direction (L).

26. Mobile forestry machine according to one of Claims 3 to 25, **characterized in that** an outer covering hood (75) is provided, which hood delimits the battery compartment (11) on the vehicle front side and extends as far as the separating wall (26) on the two vehicle outer sides.

27. Mobile forestry machine according to Claim 26, **characterized in that** a protective frame (76) that consists of tubes is provided for the covering hood (70).

## Revendications

1. Machine forestière mobile (1) qui est munie d'un châssis (2), d'une source d'énergie primaire, d'un treuil (4), d'un rancher (5) et d'une lame formant rampe réglable (6), la machine forestière (1) ne présentant aucun poste de travail de conducteur pour un opérateur,
**caractérisée en ce que** la machine forestière mobile présente un système d'entraînement électrique qui présente au moins un moteur de traction électrique et dans lequel une batterie (3) alimentant ledit au moins un moteur de traction électrique en énergie électrique est prévue comme source d'énergie primaire, dans laquelle, vu dans la direction longitudinale du véhicule (L), la batterie (3) est disposée à l'avant, le treuil (4) est disposé à côté de la batterie (3), le rancher (5) est disposé à côté du treuil (4) et la lame formant rampe réglable (6) est disposée à l'arrière du véhicule.

2. Machine forestière mobile selon la revendication 1, **caractérisée en ce que** le système d'entraînement électrique présente un moteur électrique (21) entraînant le treuil (4), et la batterie (3) alimente en énergie électrique le moteur électrique (21) entraînant le treuil (4).

3. Machine forestière mobile selon la revendication 1 ou 2, **caractérisée en ce que** la batterie (3) est disposée dans un compartiment de batterie (11), en particulier dans un compartiment de batterie fermé, dans lequel est disposée en outre au moins une pompe hydraulique (10) entraînée par un moteur électrique (100) d'un système hydraulique de la machine forestière (1), le moteur électrique (100) entraînant la pompe hydraulique (10) étant alimenté en énergie électrique par la batterie (3).

4. Machine forestière mobile selon la revendication 3, **caractérisée en ce que** la batterie (3) est disposée de manière remplaçable dans le compartiment de batterie (11) .

5. Machine forestière mobile selon l'une quelconque des revendications 1 à 4, **caractérisée en ce que** pour charger la batterie (3), un dispositif de production de courant (110) est prévu qui comprend un générateur électrique (112) entraîné par un moteur thermique (111).

6. Machine forestière mobile selon la revendication 5, **caractérisée en ce que** le dispositif de production de courant (110) est disposé dans la direction verticale au-dessus de la batterie (3).

7. Machine forestière mobile selon l'une quelconque des revendications 1 à 6, **caractérisée en ce que** la batterie (3), le treuil (4) et le rancher (5) sont disposés dans la direction verticale au-dessus d'une plaque de base (12), et un bas de caisse (13) est disposé au-dessous de la plaque de base, un espace (14) étant réalisé entre la plaque de base (12) et le bas de caisse (13).

8. Machine forestière mobile selon l'une quelconque des revendications 1 à 7, **caractérisée en ce que** le treuil (4) présente une tourelle à treuil (15) disposée au centre dans la direction transversale du véhicule (Q) et qui présente des entretoises de transmission de force (16) qui sont reliées au châssis (2).

9. Machine forestière mobile selon la revendication 8, **caractérisée en ce que** les entretoises (16) sont réalisées sous forme de cloisons étanches qui relient la plaque de base (12) au bas de caisse (13).

10. Machine forestière mobile selon la revendication 8 ou 9, **caractérisée en ce que** la tourelle à treuil (15) présente sur la face supérieure une sortie de câble (24) pour un câble (S) du treuil (4).

11. Machine forestière mobile selon l'une quelconque des revendications 8 à 10, **caractérisée en ce que** la machine forestière (1) présente sur le côté, tourné vers le rancher (5), de la tourelle à treuil (15) une cloison de séparation verticale (26) s'étendant dans la direction transversale du véhicule (Q).

12. Machine forestière mobile selon l'une quelconque des revendications 8 à 11, **caractérisée en ce que** dans la direction transversale du véhicule (Q), sur un premier côté de la tourelle à treuil (15), un compartiment hydraulique (35) est réalisé dans lequel au moins un module de puissance (115) pour ledit au moins un moteur de traction électrique et/ou un module de puissance (116) pour le moteur électrique (21) entraînant le treuil (4) sont installés, ainsi qu'un ou plusieurs des composants suivants du système hydraulique de la machine forestière (1) sont installés :
• un réservoir d'huile (36),
• un filtre à huile (37),
• au moins une vanne hydraulique (38).

13. Machine forestière mobile selon l'une quelconque des revendications 8 à 12, **caractérisée en ce que** dans la direction transversale du véhicule (Q), sur un deuxième côté de la tourelle à treuils (15), un compartiment de service (50) est réalisé dans lequel un ou plusieurs des composants suivants de la machine forestière sont installés :
• un réservoir à carburant (51) du dispositif de production de courant (110),
• une batterie de démarreur (52) du dispositif de production de courant (110),
• un filtre à air frais (53) du dispositif de production de courant (110),
• un chargeur (120) pour charger la batterie (3),
• un sectionneur de batterie (121).

14. Machine forestière mobile selon l'une quelconque des revendications 3 à 13, **caractérisée en ce que** dans la direction transversale du véhicule (Q), sur un côté du compartiment de batterie (11), un compartiment électronique (55) est réalisé dans lequel un ou plusieurs des composants suivants d'un système électrique de la machine forestière (1) sont installés :
• une commande de véhicule électronique (56) de la machine forestière (1),
• une commande électronique (57) du dispositif de production de courant (110),
• une télécommande de la machine forestière avec le chargeur et un récepteur (58) de la télécommande,
• au moins une prise (59).

15. Machine forestière mobile selon la revendication 14, **caractérisée en ce que** dans la direction verticale, au-dessus ou au-dessous du compartiment électronique (55), un compartiment de rangement (42) est réalisé.

16. Machine forestière mobile selon l'une quelconque des revendications 1 à 15, **caractérisée en ce que** dans la direction verticale, au-dessus de la batterie (3), un ou plusieurs des composants suivants sont disposés :
• le dispositif de production de courant (110),
• un dispositif de refroidissement (46) du dispositif de production de courant (110),
• un système d'échappement (48) du dispositif de production de courant (110),
• un dispositif de refroidissement (47) du système hydraulique,
• au moins un module de puissance (115) pour ledit au moins un moteur de traction électrique et/ou un module de puissance (116) pour le moteur électrique (100) entraînant le treuil (4).

17. Machine forestière mobile selon la revendication 16, **caractérisée en ce qu'**un caisson de protection thermique et d'isolation phonique est prévu dans lequel est disposé le système d'échappement (48).

18. Machine forestière mobile selon la revendication 16 ou 17, **caractérisée en ce que** le dispositif de refroidissement (46) du dispositif de production de courant (110) et/ou le dispositif de refroidissement (47) du système hydraulique est/sont disposé(s) avec une sortie d'air d'un flux d'air de refroidissement orientée verticalement vers le haut.

19. Machine forestière mobile selon l'une quelconque des revendications 7 à 18, **caractérisée en ce que** dans l'espace (14) entre la plaque de base (12) et le bas de caisse (13), des câbles de liaison électriques (39, 40) sont posés qui relient ledit au moins un moteur de traction électrique et/ou le moteur d'entraînement électrique (21) entraînant le treuil (4) au module de puissance (115 ; 116).

20. Machine forestière mobile selon l'une quelconque des revendications 11 à 19, **caractérisée en ce que** dans la cloison de séparation verticale (26), des ouvertures d'aspiration pour un flux d'air de refroidissement menant au dispositif de refroidissement (46) du dispositif de production de courant (110) et/ou au dispositif de refroidissement (47) du système hydraulique sont disposées.

21. Machine forestière mobile selon la revendication 20, **caractérisée en ce que** dans le flux d'air de refroidissement, en amont du dispositif de refroidissement (46 ; 47), les modules de puissance (115 ; 116) sont disposés.

22. Machine forestière mobile selon l'une quelconque des revendications 1 à 21, **caractérisée en ce qu'**une poulie de renvoi de câble (61) et un guidage de câble (62) doté d'un rail de guidage (63) pour le câble (S) du treuil (4) sont prévus, le rail de guidage (63) présentant une ouverture de sortie (64) pour le câble (S) sur l'avant du véhicule.

23. Machine forestière mobile selon l'une quelconque des revendications 1 à 22, **caractérisée en ce que** le rancher (5) est monté rotatif autour d'un axe vertical (V) .

24. Machine forestière mobile selon l'une quelconque des revendications 7 à 23, **caractérisée en ce que** dans la direction longitudinale du véhicule (L), entre le rancher (5) et la lame formant rampe (6), un renfort transversal (65) est disposé sur la plaque de base (12) .

25. Machine forestière mobile selon l'une quelconque des revendications 3 à 24, **caractérisée en ce que** dans la direction longitudinale du véhicule (L), entre le compartiment de batterie (11) et la sortie de câble (24), sur la tourelle à treuil (15), un creux de rangement (70) s'étendant dans la direction transversale du véhicule (Q) est réalisé qui est réalisé de préférence en étant ouvert vers le haut.

26. Machine forestière mobile selon l'une quelconque des revendications 3 à 25, **caractérisée en ce qu'**un capot extérieur (75) est prévu qui délimite le compartiment de batterie (11) sur le côté avant du véhicule et s'étend sur les deux côtés extérieurs du véhicule jusqu'à la cloison de séparation (26).

27. Machine forestière mobile selon la revendication 26, **caractérisée en ce qu'**un cadre de protection (76) composé de tubes est prévu pour le capot (70).
